(19) Europäisches Patentamt
European Patent Office
Office européen des brevets

(11) **EP 3 073 251 A1**

(12) **EUROPEAN PATENT APPLICATION**

(43) Date of publication:
**28.09.2016 Bulletin 2016/39**

(51) Int Cl.:
**G01N 21/65** (2006.01) **B82Y 30/00** (2011.01)
**B22F 1/00** (2006.01)

(21) Application number: **15160653.0**

(22) Date of filing: **24.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Agri-Food and Biosciences Institute Belfast Antrim BT9 5PX (GB)**

(72) Inventors:
• **Sharma, H.S. Shekhar**
  **Belfast Antrim BT9 5PX (GB)**
• **McCall, David**
  **Belfast Antrim BT9 5PX (GB)**
• **Carmichael, Eugene**
  **Belfast Antrim BT9 5PX (GB)**

(74) Representative: **Hally, Anna-Louise**
  **FRKelly**
  **27 Clyde Road**
  **Dublin D04 F838 (IE)**

(54) **A multi-layered substrate for spectroscopy and manufacturing process thereof**

(57) The present invention is directed to a multi-layered substrate for spectroscopy and manufacturing process thereof. Ideally, the substrate is suitable for surface enhanced Raman spectroscopy (SERS) analytical devices and methods. The substrate is ideally a multi-layered substrate comprising a base layer, metal support layer, thin carbon layer and a plurality of metal nanostructures. The invention is also directed to a method for making the substrate.

**Figure 1**

**Description**

**FIELD OF THE INVENTION**

The present invention is directed to a new multi-layered substrate for spectroscopy and manufacturing process thereof. Ideally the substrate is suitable for surface enhanced Raman spectroscopy (SERS) analytical devices and methods.

**BACKGROUND OF THE INVENTION**

Detection of trace chemicals in solid and liquid samples can be achieved by a combination of chromatography and mass spectrometry. The techniques are highly sensitive but are also labour intensive, time consuming, costly and require expensive and bulky equipment.

Many different spectroscopy methods are known. In general, they spectrally separate input of light using a prism or grating, and record the separated light beams after converting to electrical signals using an image sensor. Such methods include photocatalytic and photovoltaic reactions, using all radiated energy; photoelectron spectroscopy, including, infrared spectroscopy, X-ray Photoelectron Spectroscopy (XPS) and Ultraviolet Photoelectron Spectroscopy (UPS); and Nuclear Magnetic Resonance spectroscopy. These techniques consist of measuring the radiation scattered by analyte (e.g. fluorophor) particles adsorbed on the metal surface (e.g. silver nanoparticles) and the resulting enhanced interactions are reflected in its visible and near infrared fluorescence spectra (known as metal enhanced fluorescence-MEF). The interactions between the excited-state fluorophores with mobile electrons on the surface of the metallic nanoparticles could be exploited to design novel materials for optical, lithographic, bio-sensing and photochemical applications (Ocwieja et al., "Silver particle monolayers- formation, stability, applications", Advances in Colloid and Interface Science, 2014, in press (dx.doi.org/10.1016/j.cis.2014.07.001; Furtaw et al., "Near infrared, surface-enhanced fluorescence using silver nanoparticles aggregates in solution", Plasmonics, 2014, 9:27-34).

Surface enhanced Raman spectroscopy (SERS) is a powerful spectroscopic technique capable of detecting trace amounts of chemicals and identifying them based on the creation and resonance of virtual energy states of component electrons. This non-destructive analytical technique combines spectroscopic and optical methods and provides Raman vibrational fingerprint spectra of target analytes with sensitivities in parts per billion range. Unlike infrared spectroscopy, Raman spectroscopy is characterized by a low water response which is beneficial for analysis of biomolecules.

SERS is a rapid technique for yielding highly informative spectra which can be applied directly in aqueous environment and has high sensitivity. While there are many complex methods for fabricating SERS substrates, there has been a recent shift towards the development of simple, low cost fabrication methods that can be performed in most laboratories and have the potential of allowing SERS analysis in the field.

Typically, a SERS analysis involves spotting a $\mu$l volume of sample onto a nanofabricated substrate, allowing it to dry under ambient conditions and detecting the target analytes by Raman scattering. Detection of trace compounds has been demonstrated with SERS due to optical and chemical enhancement of nanostructures (Schmitt et al., "Raman spectroscopy - a powerful approach towards labelfree biomedical diagnostic". Endoskopie heute, 2012, 25, 262-267; Bantz et al., Recent progress in SERS biosensing. Physical Chemistry Chemical Physics, 2011, 13, 11551-11567; Piliarik et al., "Compact and low-cost biosensor based on novel approach to spectroscopy of surface plasmons". Biosensors and Bioelectronics, 2009, 24, 3430-3435). Identification of the chemical composition and the structure of target compounds are important in different applications and colloidal silver nanoparticles have been used for *in situ* SERS analysis and show excellent SERS measurement reproducibility, along with a significant enhancement of Raman signals by SERS ($10^3$ to $10^7$) and highly informative chemical signatures. This enables the detection of target molecules at parts per billion (ppb) concentrations.

Raman spectroscopy has already been acknowledged as a powerful tool for the characterization and identification of a wide range of biological materials. However, the technique suffers from limited sensitivity due to very low intensity output signals, and usually results in long collection times for analysis, even when a high laser excitation power is applied. To deal with this issue, Raman scattering can be significantly enhanced if a molecule is attached, or in immediate proximity, to nanometer-roughened metal (e.g. Ag, Au, or Cu) surfaces. This effect, known as SERS, leads to Raman signal enhancements. Under certain conditions closely spaced particles or rough nanostructures, enhancement factors sufficient to detect nano-concentration can be achieved. At least two effects contribute to the observed total enhancement. The electromagnetic enhancement effect is based on "localized surface plasmon resonance", which takes place, on the nanometer scale of the SERS substrates, while chemical enhancement or "charge transfer" is assumed to involve an electronic coupling between the adsorbed analyte and metallic substrate. This effect is important for the analysis of target compounds which are often prone to fluorescence when excited in the visible region. SERS offers many advantages in analysis due to the highly specific fingerprint spectra with very narrow and highly resolved bands that are suitable for the identification of multi-component samples or for the simultaneous measurement of multiple analytes in a non-destructive and rapid manner.

Furthermore, while there are many complex methods for fabricating SERS substrates, there has been a recent shift towards the development of simple, low cost fabrication methods that can be performed in most laboratories or potentially in the field, covering paper substrates, microfluidic biochips, nano metal clusters, galvanic displacement and stability of silver dendrites and nanostructures.

Various reports have been published on the development of practical SERS analytical systems that can be utilized for routine analysis of samples in the laboratory or in the field for example (Yu and White "A simple filter based approach to surface enhanced Raman spectroscopy for trace chemical detection, Analyst, 2012, 137(5), 1168-1173; Liu and Lee "Nanowell surface enhanced Raman scattering arrays fabricated by soft-lithography for label-free biomolecular detections in integrated microfluidics" Appl. Phys. Lett. 2005, 87, 074101; Quang et al. "A portable surface-enhanced Raman scattering sensor integrated with a lab-on-a-chip for field analysis," Lab Chip, 2008, 8, 2214-2219; Huh et al. "Enhanced on-chip SERS based biomolecular detection using electrokinetically active microwells" Lab Chip, 2009, 9, 433-439; Wang et al "Surface-enhanced Raman scattering in nanoliter droplets: towards high-sensitivity detection of mercury (II) ions," J. Anal. Bioanal. Chem. 2009, 394, 1827-1832).

However, many of the SERS substrate systems reported by research groups require complex fabrication steps to produce a surface with metal nanostructures capable of detecting trace contaminants, but the substrates are costly to fabricate on a per-sample basis. In addition, SERS activity of silver dendrites or nanostructures has been shown to decline as a result of oxidation within a few weeks {Erol et al. "SERS not to be taken for granted in the presence of oxygen", Journal of American Chemical Society, 2009, 131, 7480-7481; Qi et al. "The effect of size and size distribution on the oxidation kinetics and plasmonics of nanoscale Ag particles," Nanotechnology, 2010, 21, 215706}.

Consequently, to date the SERS substrates have not been practical for routine use in laboratory or for field-based applications due to high costs and limited shelf life due to oxidation of the nanostructures (Betz et al "Simple SERS substrates: powerful, portable, and full of potential" Phys. Chem. Chem. Phys., 2014, 16, 2224-2239). The SERS substrates also have a high degree of variability in terms of SERS enhancement from point to point and between substrates of the same material. To date, various research groups have evaluated different avenues for extending the shelf life or life time of SERS substrates, such as

- combining silver with graphene as a nano-composite (Kumar et al. "Preparation of highly water dispersible functional graphene / silver nanocomposite for the detection of melamine". Sensors and actuators B: Chemical, 2013, 181, 885-893),

- deposition of ultrathin coating of silicon oxide on silver (Barrios et al. "Extending lifetime of plasmonic silver structures designed for high resolution chemical imaging or chemical and biological sensing" Chemical Biological Radiological and Explosives (CBRNE) Sensing IX, Edited by Augustus Way Fountain III, Patrick J garner, Proc of SPIE, 2008, 69540C 1-12),

- coating of silver nanoparticles with a diamond like carbon film (Liu et al. "Ultrathin diamond like carbon film coated silver nanoparticles based substrates for surface enhanced Raman spectroscopy" ACS nano, 2010, 5, 2643-2648): and

- atomic layer deposition of alumina layer on the silver layer (Zhang et al. "Ultrastable substrate for SERS: Al2O3 overlays fabricated by atomic layer deposition yield improved anthrax biomarker detection", Journal of American Chemical Society, 2006, 128, 10304-10309).

Furthermore, galvanic displacement is a spontaneous electro-chemical reaction in which a metal ion in solution displaces atoms from a solid metal or semiconductor surface and has been used in the SERS field (Betz et al "Simple SERS substrates: powerful, portable, and full of potential" Phys. Chem. Chem. Phys., 2014, 16, 2224-2239). However, the formation of Raman hot spots by galvanic displacement or porous substrates is a random uncontrolled process (Betz et al "Simple SERS substrates: powerful, portable, and full of potential" Phys. Chem. Chem. Phys., 2014, 16, 2224-2239; Yu and White, *"Porous SERS analytical devices and methods of detecting a target analyte"* US2013/0107254 A1, publication date May 2 2013). These substrates can exhibit higher point to point variability compared with highly regular substrate, such as those formed by lithographic processes (e.g. Klarite®).

The most readily available substrate is from Renishaw Diagnostics sold under the tradename of Klarite®. Klarite® is a SERS sensor formed by lithographic processes and features a systematically designed array of (1.5 x 1.5 $\mu$m) etched with roughened gold (20 nm feature size) deposited on the internal pyramid walls) inverted pyramids patterning of gold coated silicon surface. Klarite® is made of 0.6 mm of photolithography patterned silicon coated with 0.5 $\mu$m layer of gold. Comprising regular arrays of holes, the surface patterns form photonic crystals that control the surface plasmons, which, in turn, govern the SERS amplification. However, Klarite® is an expensive SERS substrate and there is a need for a simple and low-cost SERS substrate which overcomes some or all of the disadvantages of known substrates as described below.

Accordingly, there is a need for processes to make substrates for spectroscopy based techniques, including SERS substrates, that exhibit high enhancement factors which are uniform across the surface, are stable when exposed to environmental conditions over long periods of time, and can be manufactured with a high degree of reproducibility. At present, SERS systems have seen little use in practical, field-portable chemical sensor systems, primarily due to poor reproducibility of SERS-active substrates.

The present invention aims to overcome these problems and provide a new substrate for spectroscopy based techniques, including surface enhanced Raman spectroscopy (SERS), and a process for making the new substrates.

## STATEMENTS OF THE INVENTION

According to a first aspect of the invention, there is provided a multi-layered substrate for spectroscopy, comprising

a carbon base layer;

a conductive metal support layer, preferably selected from copper, gold, aluminium, platinum or nickel, with pattern defined therein;

a thin carbon layer, preferably a thin film carbon layer; and

a plurality of silver nanostructures or gold nanostructures, preferably a plurality of silver dendrites, aligned with at least part of the conductive metal support layer pattern.

According to a preferred embodiment of the first aspect of the invention, there is provided a multi-layered substrate, preferably SERS substrate, comprising

a carbon base layer;

a copper, gold, aluminium, platinum or nickel support layer with pattern defined therein disposed on the surface of the carbon base layer;

a thin carbon layer at least partially disposed on the surface of copper, gold, aluminium or platinum support layer;

a plurality of silver or gold nanostructures, preferably a plurality of silver dendrites, at least partially disposed on the thin carbon layer and aligned with at least part of the support layer pattern; and

an optional ultrathin carbon or graphene top layer disposed or partially disposed on the plurality of the silver or gold nanostructures.

According to a second aspect of the invention, there is provided a method for preparing a substrate for spectroscopy, preferably a substrate for surface enhanced Raman spectroscopy, the method comprising:

placing a conductive metal support layer, preferably a copper, aluminium, platinum or nickel support layer, with pattern defined therein on a carbon base layer and carrying out a cleaning step, preferably a first glow discharge treatment step or an acid acid washing step, preferably a concentrated nitric acid washing step, to remove impurities from the surface of the conductive metal support layer;

depositing a thin carbon layer on the surface of metal support layer; and subsequently

depositing a silver or gold colloid onto the surface of the thin carbon layer to result in silver or gold nanostructure formation and form a substrate with enhanced activity, preferably enhanced surface plasmon resonance and/or enhanced SERS activity.

According to a third aspect of the invention, there is provided a method for enhanced detection of an analyte, the method comprising exposing the substrate of the invention to an analyte, wherein an interaction between the substrate and the analyte allows the enhanced detection of the analyte.

According to a fourth aspect of the invention, there is provided an apparatus for detecting an analyte, comprising:

the substrate according to the invention;

a radiation source, the radiation source operable to provide incident radiation on the substrate; and

a detector, the detector positioned to receive scattered radiation from the analyte when the analyte is adsorbed on the substrate, the scattered radiation being used to detect the analyte.

## DETAILED DESCRIPTION

In this specification, it will be understood that the term "comprising" encompasses and can be replaced by the terms "comprise, comprises, comprised and comprising", "consist, consists, consisted and consisting", "consist essentially of, consists essentially of, consisted essentially of and consisting essentially of" and "include, includes, included and including" or any variation thereof. These terms are considered to be totally interchangeable and they should all be afforded the widest possible interpretation.

In this specification, it will be noted that the following passages refer generally to a SERS substrate, however, it will be understood that the substrate of the invention may be used in any suitable spectroscopy based technique.

In this specification, it will be understood that the substrate may be a SERS substrate, biosensor substrate or a spectroelectrochemistry substrate.

In this specification, it will be understood that the terms "nanoparticles", "nanostructures" "nanoclusters" are interchangeable. Ideally, these nanostructures have an approximate maximum size of 100 nm. It will be understood that a "plurality of nanostructures" can form "dendrites". For example, a plurality of silver nanostructures will typically form silver dendrites which comprise multiple silver nanostructures in proximity.

In this specification, it will be understood that terms such as "layer" or "sheet" are interchangeable. Additionally, the terms "thin film carbon layer", "ultrathin film carbon layer" and "thin carbon layer" "ultrathin carbon layer" are respectively interchangeable.

In this specification, it will be understood that the term "disposed on" may be replaced by the term "placed on", "formed on" and aims to convey that this multilayer substrate comprises several separate planar layers placed or stacked on top of each other.

**According to a first aspect of the invention,** there is provided a multi-layered substrate for spectroscopy, comprising

a carbon base layer;

a conductive metal support layer, preferably selected from copper, gold, aluminium, platinum or nickel, with pattern defined therein;

a thin carbon layer; and

a plurality of silver nanostructures or gold nanostructures aligned with at least part of the conductive metal support layer pattern.

According to a preferred embodiment of the invention, the multi-layered substrate is a SERS substrate or biosensor. However, it will be understood that the substrate of the invention may be used in any suitable spectroscopy based technique. Ideally, the multi-layered substrate is a substrate or biosensor used for spectroscopy excluding NMR spectroscopy. For example, the substrate may be used as a biosensor substrate or a spectroelectrochemistry substrate. Such methods include:

- photocatalytic and photovoltaic reactions, using all radiated energy; and
- photoelectron spectroscopy, including X-ray Photoelectron Spectroscopy (XPS) and Ultraviolet Photoelectron Spectroscopy (UPS).

In this manner, the substrate of the invention is a multi-layered substrate. Further explanation of the various layers in the substrate follow.

The first layer of the substrate is a carbon base layer or sheet. It will be understood that the carbon base layer ideally has a thickness of approximately 8 to 12 nm.

A conductive metal support layer is disposed on the carbon base layer or sheet. Preferably, the conductive metal support layer is selected from copper, gold, aluminium, platinum and/or nickel.

According to a preferred embodiment, the conductive metal support layer with pattern defined therein is

a metal grid comprising a series of intersecting members, preferably straight, preferably vertical, horizontal, angular or curved members; or

a metal layer with a plurality of depressions or projections.

It will be understood that the "member" may be a strut, ridge or projection. These terms are interchangeable.

It will be understood that the metal grid may comprise an array of holes defining the series of intersecting members. However, the presence of holes is not essential.

It will also be understood that the metal layer may be provided with a plurality of depressions or indents. For example, the depressions may be in the form of a plurality of inverted pyramid or cone arrays. The depressions or indents may also take different forms, including cylindrical or rectangular arrays. Optionally, depressions may be textured and be provided with a rough internal surface.

Alternatively, the metal layer may be provided with a plurality of projections extending from the surface of the metal layer.

According to a preferred embodiment, the conductive metal support layer is a reticular mesh, preferably with rectangular reticulations. It will be understood that any form of reticular mesh array may be contemplated.

In one embodiment, the conductive metal support layer is copper, specifically a copper grid or reticular mesh. Commercial copper grids are available which are provided coated with a carbon base layer of approximately 8-12 nm thickness. Alternatively, copper grids can also be supplied without a carbon base layer and the carbon base layer is then applied as described in the Examples. The copper grid example is a readily available material which can be used as a starting material for fabricating highly sensitive, reproducible and stable substrate. The advantages are that it permits the silver/gold colloid droplet to maintain droplet diameter / size on the Cu-grids during the manufacturing/drying down process and formation of the silver or gold dendrites / nanostructures and provides for consistent distribution of analyte droplets and stopping them from spreading out across the Cu-grids. These advantages are equally applicable to any conductive metal support layer in the form of a grid.

According to one embodiment of the invention the copper, gold, aluminium, platinum or nickel grid is a 400 mesh grid. However, any other mesh sizes may be contemplated. It will be understood that any grid size or mesh may be used. Typical grid dimensions for the 400 mesh grid are 40 x 40 $\mu$m. However, other grid sizes may be used, for example ranging from 2 x 2 $\mu$m to 100 x 100 $\mu$m.

A thin carbon layer is ideally disposed on the surface of the conductive metal support layer. It will be understood that the thin carbon layer may be formed on conductive metal support layer. Furthermore, for embodiments which comprise an array of holes or reticulations, the thin carbon layer will also form on the carbon base layer.

Accordingly, the thin carbon layer or sheet is then disposed on the conductive metal support layer. Ideally, the thin film carbon layer has a thickness of approximately 1 to 20 nanometers, preferably 1 to 15 nm, more preferably 1 to 10 nm, even more preferably 3 to 5nm..

It will be understood that a plurality of silver and/or gold nanostructures are then disposed on the thin carbon layer and these silver and/or gold nanostructures are disposed on or aligned with at least part of the conductive metal support layer pattern.

It will be understood that the nanostructures or nanoparticles may be in the form of dendrites, rods or wires for example. Ideally, the gold nanostructures are in the form of nanorods, nanowires and/or nanogold. Similarly the silver nanostructures are ideally in the form of dendrites, nanowires and/or nanobeams. For example, a plurality of silver nanostructures will typically form silver dendrites which comprise multiple silver nanostructures in proximity.

It will be understood that silver dendrites, rods and wires are formed by a self assembly process during manufacture, specifically drying in ambient conditions, and the rate of the process is dependent on the physico-chemical parameters, such as ionic strength, pH, surface charge, temperature, particle size and bulk concentration. It has been shown that the silver nanoparticles exhibit tunable surface plasmon resonance properties from the visible to near infrared regions. The surface plasmon bands can be tuned over an extended wavelength range by controlling the length/shape of the silver nanostructures.

According to a preferred embodiment of the invention, the plurality of silver or gold nanostructures disposed on the thin carbon layer are aligned with less than approximately40% of the conductive metal support layer pattern. Preferably, the plurality of silver or gold nanostructures disposed on the thin carbon layer are aligned with approximately 10 to 20%, preferably 20% of the conductive metal support layer pattern. We have found this coverage of the grid bars maximises SERS activity. Higher coverage, beyond 40%-50% for example, may reduce SERS activity in terms of sensitivity.

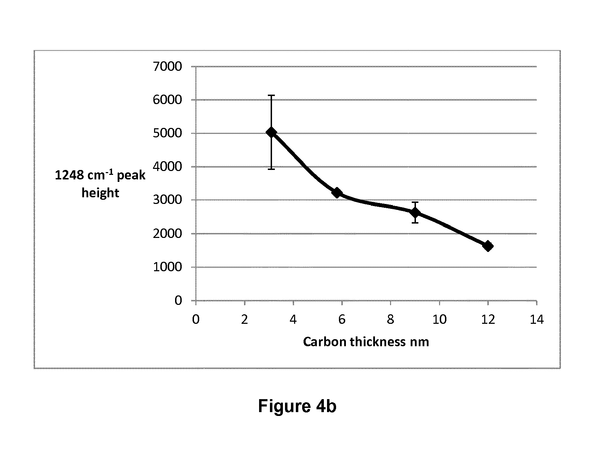

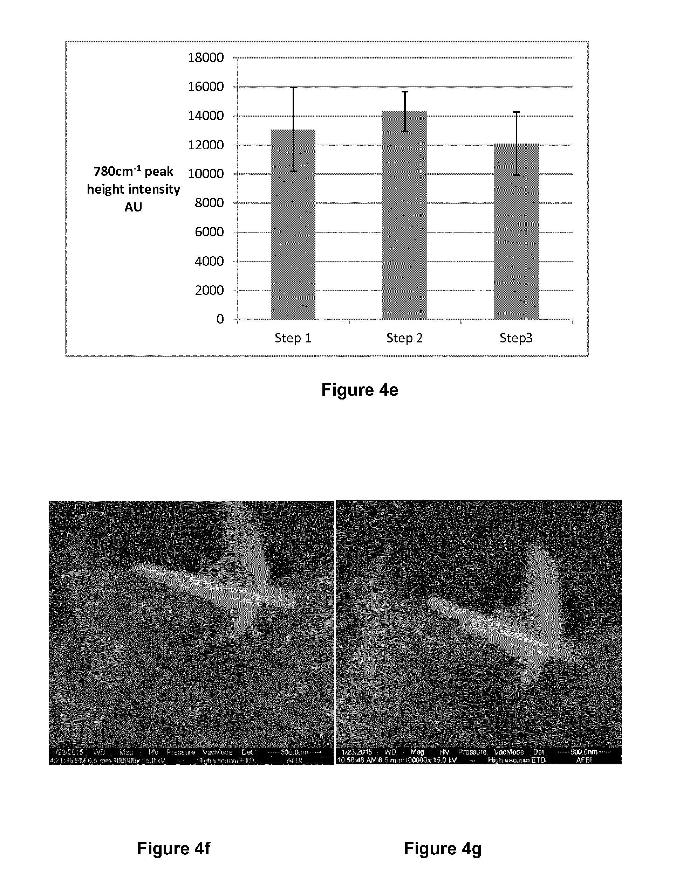

A final ultrathin layer of carbon or graphene may then be disposed on the substrate. In this manner, the ultrathin film carbon or graphene top layer is disposed or partially disposed on the plurality of the silver or gold nanostructures. However, this ultrathin layer is optional. We have found, as shown in Figures 4b and 4e, that this optional ultrathin top layer may further improve the sensitivity of the substrate. Ideally, the optional ultrathin film carbon top layer has a thickness of approximately 1 - 3 nm, preferably 1 - 2 nm.

According to one embodiment of the first aspect of the invention, there is provided a multi-layered substrate, preferably SERS substrate, of any of the preceding claims comprising

a carbon base layer;

a copper, gold, aluminium, platinum or nickel support layer with pattern defined therein disposed on the surface of the carbon base layer;

a thin carbon layer at least partially disposed on the surface of copper, gold, aluminium or platinum support layer;

a plurality of silver or gold nanostructures at least partially disposed on the thin carbon layer and aligned with at least part of the support layer pattern; and

an optional ultrathin film carbon or graphene top layer disposed or partially disposed on the plurality of the silver or gold nanostructures.

It will be understood that the term "disposed on" may be replaced by the term "placed on", "formed on" and aims to convey that this multilayer substrate comprises several separate planar layers placed or stacked on top of each other.

According to another embodiment of the first aspect of the invention, there is provided a multi-layered substrate, preferably SERS substrate, of any of the preceding claims comprising
a carbon base layer;
a copper, gold, aluminium, platinum or nickel grid in the form of a reticular mesh disposed on the surface of the carbon base layer;
a thin carbon layer disposed or at least partially disposed on the surface of reticular mesh;
a plurality of silver or gold nanostructures at least partially disposed on the thin carbon layer and aligned with at least part of the reticular mesh; and
an optional ultrathin film carbon or graphene top layer disposed or partially disposed on the plurality of the silver or gold nanostructures.
Advantageously, the substrate of the invention is a SERS substrate and provides for

- high SERS signal enhancement - superior to conventional substrates such as Klarite®;
- High signal to noise ratio allowing for clear high quality signal and excellent resolution;
- Highly reproducible signals;
- Relatively simple and low cost fabrication method which can be industrially scaled up; and
- the substrate is compatible with most Raman spectrometers including handheld devices.

The advantages are also applicable to the substrate when used in other spectroscopy based techniques, such as metal enhanced fluorescence etc. For general spectroscopy methods, the advantages also include improved sensitivity in terms of improved/lower detection range, It is understood that the key factors which determine the application of spectroscopy based techniques, such as SERS, as a rapid analytical tool in sectors, such as food, environmental monitoring and homeland security, are

(a) the degree of signal enhancement factor,
(b) the reproducibility; and
(c) stability of the substrate which are essential for adoption of this technology by end users.

The present invention aims to address these issues to result in a sensitive, reproducible and stable substrate for spectroscopy. The advantages are highlighted with reference to SERS but are also applicable to spectroscopy methods in general.
Spot to spot reproducibility during Raman signal acquisition can be variable over the SERS active area. The SERS active area should be sufficient to allow consistent accusation from multiple spots to achieve a high level of reproducibility (up to 2 mm) and low signal to noise ratio. Advantageously, the present invention addresses the problem of the uncontrolled reaction of metal with silver colloid (other metal colloid solutions) during galvanic displacement reaction which are diffusion-limited" as highlighted in Betz et al., in "Simple SERS substrates: powerful, portable, and full of potential" Phys. Chem. Chem. Phys., 2014, 16, 2224-2239. Essentially, the method and substrate of the invention is based on the fabrication of stable and sensitive substrate layered with carbon and silver nanostructures for the measurements. This enables obtaining reproducible SERS spectra from different target compounds with enhancement factors of up to several orders of magnitude ($\leq 10^5$). Various advantages are outlined below.
Firstly, initial glow discharge treatment of the exposed conductive metal support layer/grid, preferably copper, aluminium or platinum or nickel grid removed any initial surface deposits and impurities resulting in improved and enhanced substrate sensitivity and stability results. Comparative Raman spectra of copper grids before and after glow discharge treatment are presented to show the advantages of the treatment step.
Secondly, the invention involves the use of a substrate which facilitates control of a metal, ideally silver or gold, nanoparticle distribution during fabrication of the substrate and testing of the analyte. This advantage and level of control is due to the galvanic role of the pattern on the conductive metal support layer, namely the copper grid bars on the formation of silver/gold nanostructures around the rectangular open areas (40 x 40 $\mu$m) supported by the base carbon layer. The spread of colloidal solution on a flat copper base cannot be controlled readily as the formation of silver dendrites / nanostructures is likely to be variable over the available flat surface area. This is a crucial step for controlling spread of colloidal solution on the Cu-grid with 40 x 40 $\mu$m holes with a carbon base layer which will ensure a more regular distribution of silver dendrites.
Thirdly, the introduction of a thin carbon layer/thin film carbon layer between the conductive metal support layer or grid and the silver or gold nanostructures layer reduces the possible reaction of silver colloid or the analyte and conductive metal support layer (e.g. copper) which would lead to unwanted discolouration of the conductive metal support layer. This fabrication steps allows the conductive metal support layer or grid to be stable by preventing metal oxide formation during silver or gold colloid application. When the analyte is applied on the conductive metal support layer or grid, the carbon barrier stops it from reacting with the conductive metal support layer. Random arrays of features, i.e.

nanostructures such as dendrites, as long as the distribution of features within the nano to sub-micron scale, will give enhanced reproducibility and this can offer significant advantages in terms of ease of substrate preparation, accuracy of test and reproducibility.

Fourthly, the additional and optional glow discharge treatment of silver or gold nanostructures on the fabricated substrate further enhances substrate sensitivity and stability by removing fine surface deposits (e.g. residues) on the silver or gold nanostructures. Comparative results to show the advantages of glow discharge treatment are presented in Example 1.

Finally, the SERS substrate with the exposed silver or gold nanostructures is optionally coated with an ultrathin, e.g.1 - 3 nm, carbon or graphene layer to minimise oxidation during storage. We postulate, as shown in Experiment 3, that a final carbon or graphene coating on the silver or gold nanostructures reduced the degree of signal variability. This indicates that over a longer period it may extend the shelf life of the substrate of the invention, such as the preferred SERS Cu-grid substrate. We have found that the prepared substrates can be stored advantageously in a standard packaging unit filled with carbon dioxide and nitrogen at 4°C for at least 1 month or more.

The SERS enhancement factor must be measured over regions corresponding to the size of the laser beam. With laser spot sizes typically between 50 - 100 $\mu$m in diameter, a good compromise is 75 $\mu$m$^2$. Over such measurement area, enhancement factors near $10^5$ are desirable.

The present invention aims to control the morphology, distribution and storage stability of the resulting nanoscale features of the substrate so that it is highly reproducible, consistent and possesses longer shelf life. Accordingly, the substrate nano-structured metal surface allows for high sensitivity, reproducibility and signal-to-noise ratio.

Advantageously, the substrate of the present invention may be used for the characterization of a range of target biomolecules, such as salicylic acid, jasmonic acid , melamine, malachite green, brilliant green, crystal violet, methylparathion, chorpyrifos, cypermethrin, glyphosate, methamidophos, dieldrin, carbendazium, methomyl, omethoate and malathion (Costa et al, "Surface enhanced Raman spectroscopy studies of organophosphorous model molecules and pesticides". Phys. Chem. Chem. Phys, 2012, 14, 15645-15651; Zou, et al., "Surface enhanced Raman scattering liquid sensor for quantitative detection of trace melamine in dairy products". Chapter 8, Intech: 2014, dx.doi.org/10.5772/52485).

According to a second aspect of the invention, there is provided a method for preparing a substrate for spectroscopy, preferably a substrate for surface enhanced Raman spectroscopy, the method comprising:

placing a conductive metal support layer, preferably a copper, aluminium, platinum or nickel support layer, with pattern defined therein on a carbon base layer and carrying out a cleaning step, preferably a first glow discharge treatment step or acid washing step, to remove impurities from the surface of the conductive metal support layer;

depositing a thin carbon layer on the surface of metal support layer; and subsequently depositing a silver or gold colloid onto the surface of the thin carbon layer to result in silver or gold nanostructure formation and formation of a substrate with enhanced surface plasmon resonance and activity.

The first cleaning step is understood to include any method to remove impurities on the conductive metal support layer, e.g. copper grid (such as anti-tarnish treatment of copper).

The method of invention enables the preparation of a low cost substrate for spectroscopy, such as a SERS substrate, and essentially involves using a combination of glow discharge treatment to clean the conductive metal support layer and/or metal nanostructures and involves the deposition of the following layers to form a multi-layer substrate:

- depositing a conductive metal support layer on a carbon base layer;
- depositing a thin carbon layer on the conductive metal support layer;
- depositing metal nanostructures (e.g. silver, gold, etc) on the thin film carbon layer via galvanic displacement; and
- optionally depositing an ultra thin layer of carbon or graphene on the metal nanostructures.

It will be understood that the first glow discharge treatment or alternative surface cleaning step, such as acid wash is required and aims to improve the sensitivity of the resulting substrate.

It will be understood that the second glow discharge treatment step is optional and aims to improve the sensitivity of the resultant substrate.

During the preparation of the SERS substrate loading too much silver colloid (such as 30 $\mu$l or more) application on the Cu-grid can result in formation of dendrites on 50 - 60 % of the copper grid bars which can cause reduction in surface enhanced activity. Accordingly, the plurality of silver or gold nanostructures disposed on the thin carbon layer are preferably aligned with less than approximately 40% of the conductive metal support layer pattern. Preferably, the plurality of silver or gold nanostructures disposed on the thin carbon layer are aligned with approximately 10 to 20 %, preferably 20 % of the conductive metal support layer pattern. After examining a range of silver colloid volumes, the optimal treatment conditions reported in Examples 1 and 2 indicated that SERS enhancement factor of dendrites in the Cu-grid substrate was approximately 6.1 x 10^5 at 20% coverage of the grid bars. It will be understood that the SERS signal intensity provides for an average enhancement factor over conventional substrates, such as conventional Raman spectroscopy using for example filter paper loaded with 20 mM R6G (results in Example 2).

Ideally, approximately 1 to 40 μl, preferably 6 to 30 μl, more preferably 20 to 30 μl, of silver or gold colloid (nanoparticle concentration range 1 to 15 ppm , preferably 5 to 12, more preferably 11.43 ppm for both silver and gold colloids) is deposited on the substrate to achieve maximum SERS enhancement of the analyte.

In a preferred embodiment of the invention, the silver or gold colloid solution is deposited onto the surface of the thin film carbon layer and subjected to air drying prior to a second and optional glow discharge treatment.

Ideally, the second glow discharge treatment step takes place for approximately 10 to 60 seconds, preferably 20, 30 or 40 seconds at 10 to 30 mA, preferably 20 mA. We found that the optimum peak height of target analyte was achieved with the 30 sec at 20 mA (Example 1).

It will be understood that the deposition steps may include one or more of coating, spraying, pipetting and/or soaking. It will be understood that any suitable fabrication method may be contemplated. Ideally, the method is a coating fabrication method which may include etching, epitaxially growing layers, chemical deposition, physical vapour deposition (PVD), evaporation deposition, chemical vapour deposition (CVD), atomic layer deposition (ALD) and/or electron-beam patterning, etching, and coating.

It will also be understood that additional components can be added to the multi-layered substrate at a post-manufacturing stage, such as antibodies, biological compounds/particles, chemicals, microfluidic systems, roughened surfaces, nanoparticles, nanoaggregates, nanopores/nanodisks, nanorods, nanowires, conductive metal coated microarrays, and/or combinations thereof.

According to another embodiment of the invention, the method comprises the further step of depositing an ultrathin carbon or graphene top layer of approximately 1 to 3 nm, preferably 1 to 2 nm, onto the SERS substrate.

According to all embodiments, the carbon base layer has a thickness of approximately 8 to 12 nm. Ideally, the copper, aluminium, platinum or nickel grid is a transmission electron microscopy grid, preferably a 400 mesh grid. It will be understood that any grid size or mesh may be used. Typical grid dimensions for the 400 mesh grid are 40 x 40 μm. However, other grid sizes may be used, for example ranging from 2 x 2 μm to 100 x 100 μm. The thin film carbon layer ideally has a thickness of approximately 1 to 10 nm, preferably 3 to 5 nm and the optional ultrathin film carbon top layer has a thickness of approximately 1 to 3 nm.

Advantageously, the plurality of silver or gold nanostructures disposed on the thin film carbon layer are uniformly aligned with approximately 10 - 20 % of the conductive metal support layer pattern. The plurality of silver or gold nanostructures are uniformly arranged in that they are closely spaced, predominantly unaggregated and confined to nearly a single plane.

It will be understood that after deposition the colloidal metal particles are associated with and/or bind to the thin film carbon and are aligned with the conductive metal support layer.

We postulate that the mechanism of adherence of the various layers in the multi-layer substrate, such as the silver or gold nanostructures/dendrites to the thin film carbon layer is bound by electrostatic / electromagnetic forces.

According to a third aspect of the invention, there is provided a method for enhanced detection of an analyte, the method comprising exposing the substrate of the invention to an analyte, wherein an interaction between the substrate and the analyte allows the enhanced detection of the analyte.

Ideally, the detection method involves spectroscopy excluding NMR spectroscopy. The detection method may involve Raman spectroscopy, specifically SERS. Alternatively, the detection method may involve other spectroscopy techniques, including:

- photocatalytic and photovoltaic reactions, using all radiated energy; and photoelectron spectroscopy, including X-ray Photoelectron Spectroscopy (XPS) and Ultraviolet Photoelectron Spectroscopy (UPS).

Essentially, these techniques consist of measuring the radiation scattered by analyte (e.g. fluorophor) particles adsorbed on the metal surface (e.g. silver nanoparticles) and the resulting enhanced interactions are reflected in its visible and near infrared fluorescence spectra (known as metal enhanced fluorescence- MEF) and utilise the following optical/light/spectroscopy techniques:

- a spectrum of light emitted from the sample;
- illuminating the sample;
- external excitation energy;
- plasmon resonance excited by electro-magnetic radiation;
- electro-magnetic radiation.

According to a fourth aspect of the invention, there is provided an apparatus for detecting an analyte, comprising:

the substrate according to the invention;
a radiation source, the radiation source operable to provide incident radiation on the substrate; and
a detector, the detector positioned to receive scattered radiation from the analyte when the analyte is adsorbed on the substrate, the scattered radiation being used to detect the analyte.

The disclosed substrate fabrication steps can significantly reduce the high cost of using SERS substrate as a routine test, while increasing the performance and sensitivity of detecting target analytes. This new concept represents a significant advancement in on-site analysis, allowing SERS to be more accessible in terms of cost and reliability.

It will be understood that the substrate of the present invention may be used for many different applications, including but not limited to:

- Plant analysis: Major applications are in the detection of plant metabolites, for example salicylic acid, jasmonic acid and others involved in the biotic (plant pathogens) and abiotic (heat, cold, salt and drought) stress response of crop plants.
- Medical diagnosis and healthcare: SERS substrate can be used to identify and characterize biological samples, including identification of proteins, DNA, virus and bacteria.
- Chemical, food and biological analysis: Many additives or adulterants, such as melamine found in milk powder or malachite green can be extremely harmful to children and end-users even at very low concentrations. Using SERS, biological, water and soil samples can be assessed quickly to detect levels of pollutants, such as organo phosphates (glyphosate), melamine and other pollutants in air, water and soil.

- Pharmaceutical and drug analysis: Rapid identification of drugs and residues in the field will be a real benefit to those combating drug related crime or sporting abuse. Often only small residues of a sample can be collected from a crime scene. SERS also opens up a potential route for fast roadside drug screening using saliva or unknown material samples.
- Forensics and trace analysis: Explosives are a serious threat to security of many event organisers or security organisations. Being able to identify trace levels allows field operators to better screen for threats at security checkpoints or on the battlefield. High value products that are subject to duties and taxes are often the target of piracy and fraud. Petrol and diesel fuels are such examples. By adding a small amount of a SERS active taggant, it can be used as an indicator of authenticity.

Additionally, the substrate of the present invention is suitable for handheld/portable spectrometers, preferably Raman spectrometers. Portable instruments capable of spectroscopic identification of biological/chemical trace compounds are highly valuable for field use.

The present invention will now be described by the following non-limiting figures and examples.

## **FIGURE LEGENDS**

**Figure 1** shows an image of copper grid placed on a standard microscope glass slide.

**Figure 2** is a scanning electron micrograph (SEM) of the copper grid (x 64 magnification) showing regular rectangular holes which aid in the control of analyte spreading out on to copper grid (3 mm, 400 mesh copper grids with hole dimension of 40 x 40 $\mu$m).

**Figure 3** illustrates side view of a Cu-grid showing five substrate fabrication steps (a, b, c, d and e).

**Figure 4 (a)** is SEM image of a Cu-grid depicting the surface features of glow discharge treated (480s @ 30mA) to reduce inherent contamination of the copper surface. The grids have a carbon base layer support which inhibits sample droplet from penetrating through the grid spaces.

**Figure 4 (b)** shows measured intensity of the 1248 cm$^{-1}$ salicylic acid (0.02 %) Raman peak to show the effect of carbon layer (details shown in Figure 3b) at 3, 4.7, 10 and 13.3 nm thickness on SERS. Optimum carbon layer was 3 - 5 nm (Salicylic acid is used as a reference compound to detect performance of Cu-grid substrate).

**Figure 4 (c)** is an overlay of salicylic acid (0.02 %) Raman shift spectra for 6, 12, 24 and 30 $\mu$l volumes (details in Figure 3c) of silver colloid applied on the Cu-grid substrate and a plot of mean peak height of 1248 cm$^{-1}$ salicylic acid (arrow) at the four silver colloid concentrations indicating that 24 $\mu$l (0.69 $\mu$g / Cu-grid) as optimum volume for application.

**Figure 4 (d)** is an overlay of salicylic acid (0.02%) Raman shift spectra for increasing time of glow discharge treatment (details in Figure 3d) for 20, 30 and 40 sec @ 20 mA and a plot of mean peak heights of 1248 cm$^{-1}$ salicylic acid (arrow) at the 3 treatmentsis. Optimum treatment time was 30 seconds.

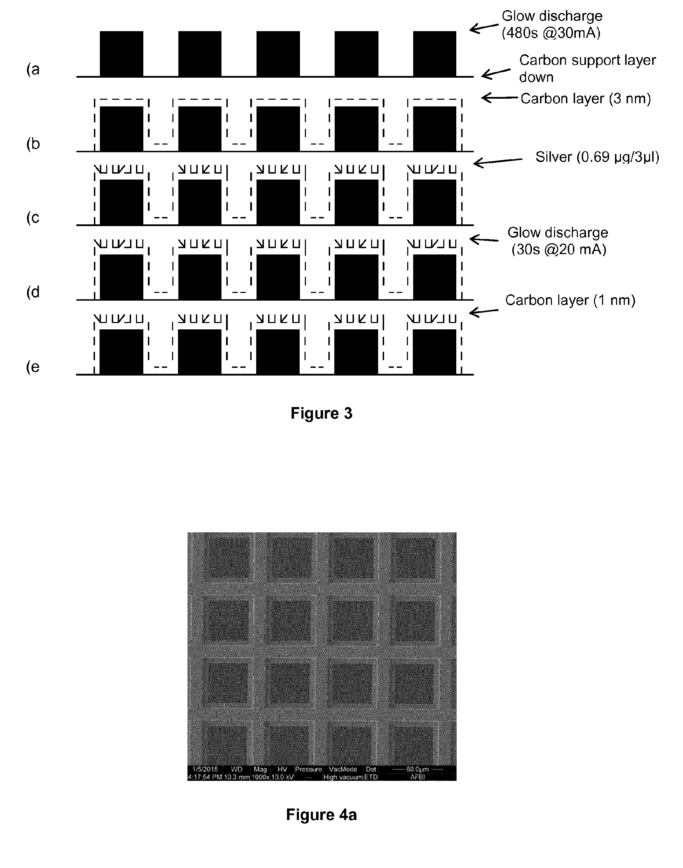

**Figure 4 (e)** shows changes in the measured peak height of silver nanostructures on Cu-grid at the 780 cm$^{-1}$ Raman peak shift (step 1 after substrate fabrication at Figure 3c) after silver colloid application and after glow discharge treatment (30 sec @ 20 mA; 24 $\mu$l colloid; step 2 after substrate fabrication at Figure 3d) and after carbon coating (1 nm) on the silver nanostructures (step 3 after substrate fabrication at Figure 3e). An increase in peak height after glow discharge treatment was consistently observed, followed by a slight reduction in peak height after carbon coating of the silver nanostructures. Note this measurement is carried out as sequential steps without using an analyte.

**Figure 4 (f)** Images of silver dendrites were also recorded before carbon coating.

**Figure 4 (g)** after carbon coating to show minimal impact as result of the treatment.

**Figure 5 (a)** is a scanning electron micrograph (1000 x magnification) showing the distribution of silver dendrites on the rectangular grid bars. The grids have a carbon support layer (Figure 3a) to inhibit fluid flow through the grids and to aid control of applied droplets;

**Figure 5 (b)** micrograph at instrument magnification of 10,000 x showing the silver dendrites on the copper grid bars.

**Figure 5 (c)** illustrates micrographs of Cu-grid coated with carbon (3 nm) followed by application of colloidal gold (3 $\mu$l volume, 0.69 $\mu$g / Cu-grid) at three magnifications 1000 x ;

**Figure 5 (d)** 2000 x and Figure 5(e) 100,000 x to show distribution of nano-gold structures on the copper grid bars. Glow discharge treatment reduced performance and accordingly the grids were not treated with glow-discharge.

**Figure 5 (f)** The performance of the Cu-grid with gold nanostructures was evaluated by applying 3 $\mu$l of R6G (1 $\mu$M). Although gold nanostructures showed high signal intensity of R6G at both 10 and 20 sec instrument exposure times, signal resolution of rhodamine (R6G) reference peaks by silver dendrites on cu-grid are far superior. Subsequently all tests were carried out with silver colloid

**Figures 6 (a) and (b)** illustrates Cu-grid (a) before and (b) after fabrication of the SERS substrate. Note the circular outline of silver colloid drops formed on the copper grid.

**Figure 6 (c)** Image of SERS substrate fabricated using gold, nickel and copper-grids. Silver nanostructures formed on the gold and nickel grids showed very poor SERS activity compared to the Cu-grids. Results not presented.

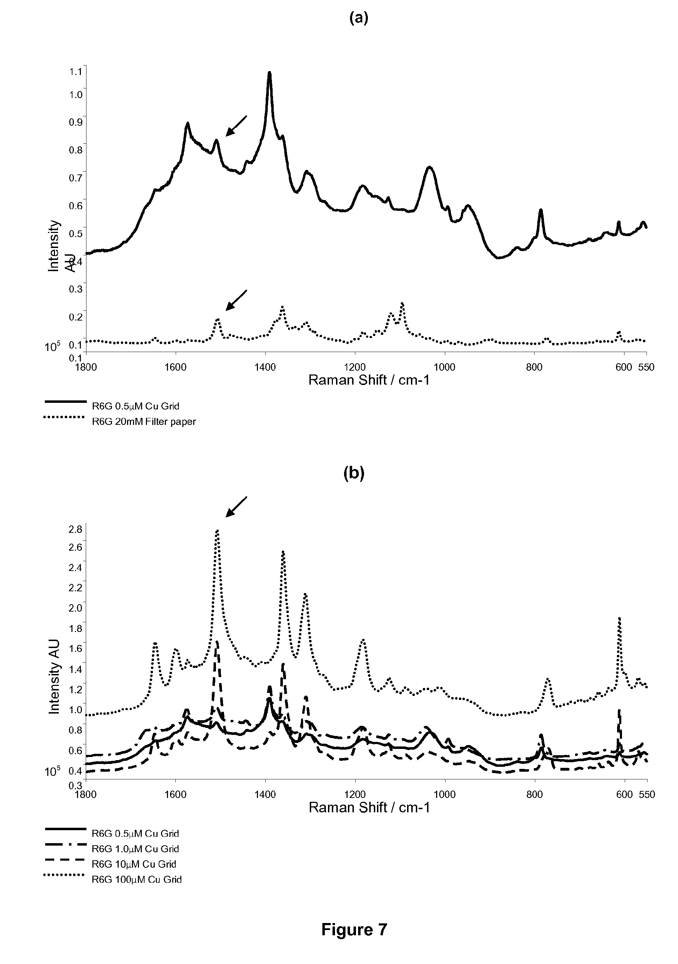

**Figures 7a and 7b** illustrate the detection performance of the SERS technique using R6G as a reference analyte (peak height at 1508 cm$^{-1}$). Figure 7a depicts a comparison of R6G detection (0.5 $\mu$M) performance of Cu-grid with a sample on filter paper (20 mM). Note the differences in the concentrations of R6G. Figure 7b depicts Raman spectral overlay of Cu-grids, with dilutions of R6G in water from 100, 10, 1 and 0.5 $\mu$M. For each concentration, 9 measurements were made randomly and averaged (3 spots x 3 Cu-grid substrates, arrow indicating the changes in 1508 cm$^{-1}$ peak height).

**Figure 8 (a)** illustrates mean detection level of R6G as the 1508 cm$^{-1}$ peak heights at four concentrations (100, 10, 1 and 0.5 $\mu$M) with error bars.

**Figure 8 (b)** Bar chart to show averaged peak heights of the 3 replicate substrates (mean of 3 spots per substrate) for each of the 4 test concentrations (100, 10, 1, 0.5 $\mu$M). The error bars show the standard deviation of the 1508 cm$^{-1}$ peak height

**Figure 9** shows detection range of of R6G by Klarite® (O) and the Cu-grid (X) presented as peak height at 1508 cm$^{-1}$. Cu-grid can detect R6G at 0.240 ppm (0.5 $\mu$M) and in contrast detection limit for Klarite® is 0.479 ppm (1 $\mu$M). The error bars show the standard deviation of the intensity measured.

**Figure 10** shows detection range of glyphosate by Cu-grids presented as peak height at 1440 cm$^{-1}$Raman peak shift. Cu-grid can detect glyphosate as low as 0.845 ppm (5 $\mu$M) and in contrast Klarite® could not detect glyphosate at any of the test concentrations due to poor Raman peak shift intensity. The error bars show the standard deviation of the intensity measured.

**Figure 11** shows detection range of melamine by Klarite® (O) and the Cu-grid (X) presented as peak height at 685 cm$^{-1}$. Cu-grid can detect melamine 0.126 ppm (1 $\mu$M) and in contrast Klarite® cannot detect melamine at that concentration. The detection limit for Klarite® is 0.630 ppm (5 $\mu$M) melamine. The error bars show the standard deviation of the intensity measured.

**Figure 12** shows an overlay of glyphosate detected at a range of concentrations (169 ppm - 0.845 ppm) using Cu-grids. Note the intensity of the 1440 cm$^{-1}$ glyphosate (arrow) Raman peak for the test concentrations.

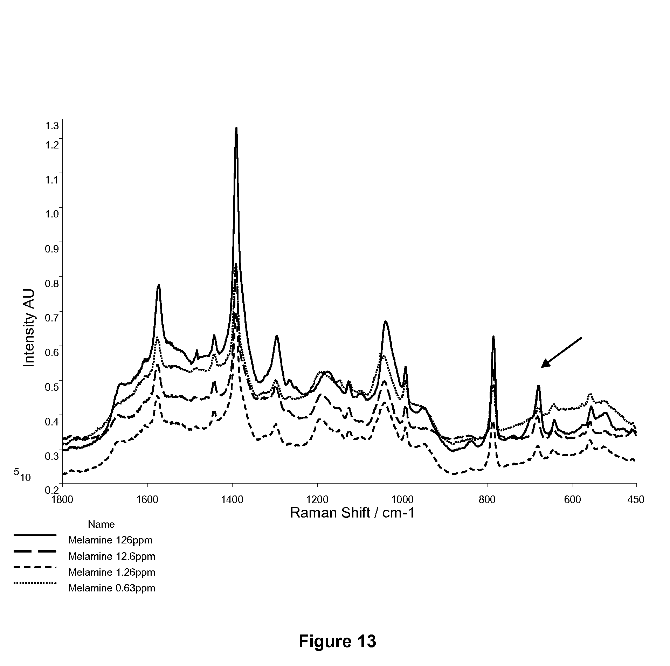

**Figure 13** shows an overlay of melamine detected at a range of concentrations (126 ppm - 0.630 ppm) using Cu-grid substrate. The changes in the peak height of the 685 cm$^{-1}$ melamine (arrow) Raman peak shift are shown for the test concentrations.

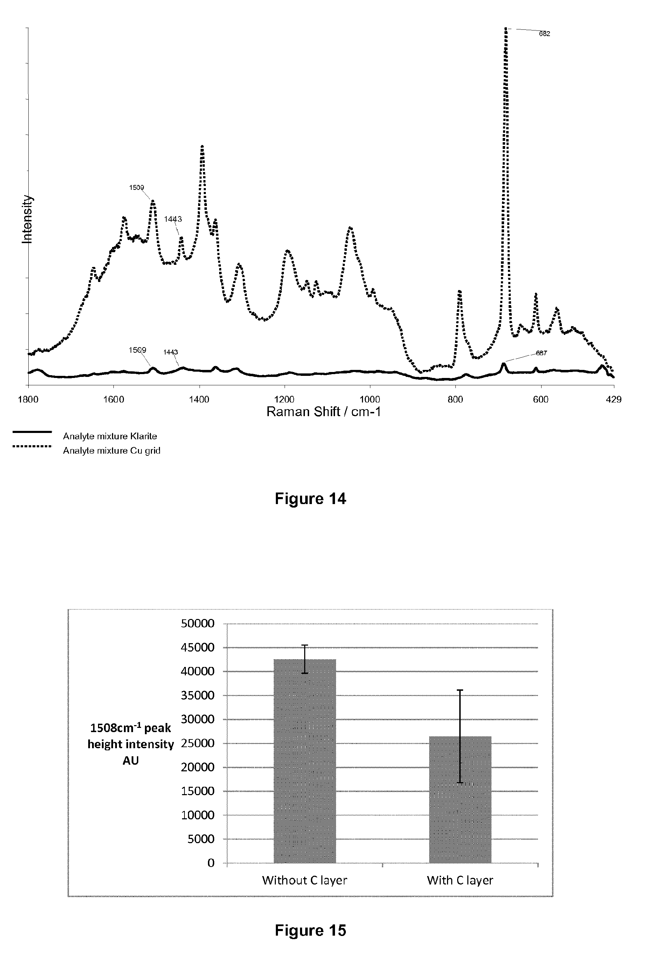

**Figure 14** illustrates the detection of a mixture (3 $\mu$l volume) of analytes, such as R6G (0.1 $\mu$M), melamine (1.26 $\mu$M), and glyphosate (1.69 $\mu$M) showing highly intense Raman peak shift signals at 1509 (R6G), 1443 (glyphosate), 682/687 (melamine) cm$^{-1}$ for Cu-grids compared to very low intensity signal detected by Klarite® for the same sample. The 1443 cm$^{-1}$ peak detected using Klarite ® may have been possible due to the presentation of samples as a mixture.

**Figure 15** Comparison of 1508 cm$^{-1}$ peak height intensity of R6G on Cu-grids with no final carbon layer on top of the silver nanostructures and with a final carbon layer showing a reduction in measured peak height after carbon coating. The standard error for measurement was higher for carbon coated Cu-grids.

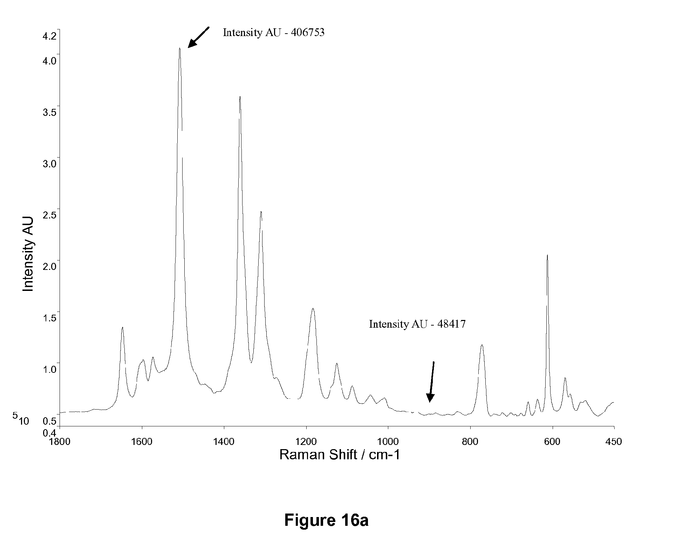

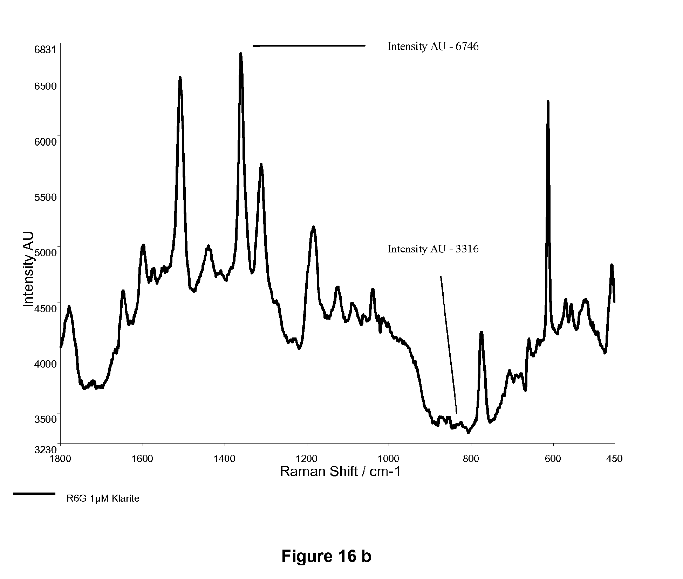

**Figure 16** (a) Cu-grid substrate showing high signal to noise ratio of the substrate {R6G 100 $\mu$M:- 406753 (strongest peak intensity) /48417 (Raman inactive area) = ratio 8.4:1} Figure 16 (b) the Klarite® substrate showing low signal to noise ratio {R6G 100 $\mu$m: - 45723 (strongest peak) / 10928 (Raman inactive area) = 4.1:1}

**Figures 17 (a) and (b)** Examples of (a) fabricated Cu-grids used for evaluation of storage conditions (b) an example of the modified environment packaging used in the test.

**Figures 18 (a) and (b):** (a) Evaluation of Cu-grids stored (4°C) in modified atmosphere for 0, 2 , 4 and 6 weeks (mean of 9 measurements 3 x 3 substrates) and comparison with the 1508 cm$^{-1}$ peak height intensity of fresh Klarite® assessed under exposure time of 25 sec.

The signal intensity of Cu-grids with silver dendrites from time (T) 0-6 weeks (Ag T-0 to Ag T - 6 weeks) and coated with carbon (Ag + CT- 0 to Ag + CT- 6 weeks) for the same period were reduced after 2$^{nd}$ week of storage and stabilised in the following weeks. At the end of the 6 week period of storage time, the R6G signal intensity of Cu-grids at the 1508 cm$^{-1}$ peak was 3 times better than that obtained using Klarite® (b) Storage of Cu-grids in high vacuum (10$^{-7}$ torr range and 15°C) for 3 weeks showed 5 to 10 % reduction of the 1508 cm$^{-1}$ R6G peak height intensity (instrument exposure time was 10 sec). The 1508 cm$^{-1}$ peak intensities of stored Cu-grids after 3 weeks of storage was at least 5 times better than that obtained using Klarite® (mean peak height of replicate substrates shown in figure).

## Examples

## Example 1

## Fabrication of copper grid SERS active substrate

**Materials:** Silver nitrate, hydrogen tetrachloroaurate, sodium citrate, rhodamine (R6G) and salicylic acid were purchased from Sigma-Aldrich. Copper grids (Cu-grid) with carbon support layer were purchased from a commercial company (TAAB). General consumables required for coating were supplied by instrument manufacturer (Quorum). The Cu-grids are used as a carbon layer down and termed as carbon base layer for this application.

## Methods

Initial Glow discharge treatment of Cu-grid: Cu-grids are copper discs with a fine mesh (400 mesh size). The Cu-grids are supplied on a carbon base layer and were glow discharge treated for 480 sec at 30 mA to clean the surface of the copper using Quorum coating unit (Q150T ES).

Cu-grids were also treated with nitric acid (7%) for 3 minutes to remove surface contaminants and any anti-tarnish treatment (usually applied by the grid manufacturers) followed by washing in ethanol (100 ml). We preferred the glow discharge treatment as it is more convenient not to use chemical washes and for health and safety reasons.

Thin Film Carbon coating: The Quorum coating unit (Q150T ES) was modified to house a carbon rod evaporation head. The instrument was set up for ramped carbon rod evaporation to deposit a thin layer of carbon on the exposed Cu-grid surface. Coating thickness of approximately 3-15 nm were applied by monitoring the film thickness sensor of the instrument (Q150T ES).

Synthesis of silver colloidal solution: Silver nanoparticles were synthesized using the protocols reported (Lee and Meisel, "Adsorption and Suriace-Enhanced Raman of Dyes on Silver and Gold Sols". J. Phys. Chem. 1982, 86, 3391-3395). Silver nitrate (90 g) was added to 500 ml of MQ Water, which was heated up gradually in a flask under vigorous stirring. Sodium citrate (100 mg) was added gently and the solution was left to boil for an additional 10 min. After the solution turned greenish brown, which indicated the formation of silver colloidal solution (approximately 11.43 ppm), the solution was removed from the heating mantle.

Synthesis of gold colloidal solution: Gold nanoparticles were synthesized using the protocols reported (Cyrankiewicz et al. "Study of SERS efficiency of metallic colloidal systems". Journal of Physics: Conference Series, 2007, 79, 1, Article ID 012013). Stock solution (10 mM) of hydrogen tetrachloroaurate (HAuCl$_4$.3H$_2$O, 1 g in 250 ml of MQ Water) was prepared to make gold(III) ions and stored in a brown bottle. Gold solution (20 ml, 1.0mM) was heated up gradually to 98°C in a flask under vigorous stirring. Sodium citrate (2ml of 1% solution of Na$_3$C$_6$H$_5$O$_7$.2H$_2$O) was added gently and the gold colloid solution was formed as the citrate reduces the gold(III) for approximately 30 min. After the solution turned deep red, the colloidal solution (11.43 mg silver in 100 ml/11.43 ppm) was removed from the heating mantle.

Application of silver or gold colloid on Cu-grid with carbon : The silver colloidal solution was applied as 3 $\mu$l drops with the aid of a pipette (Rainin pipet-lite xls 20) on the Cu-grid which had been coated with carbon (3 nm) and followed by air drying with gentle heat (25-35°C). The test concentrations of silver colloid on the Cu-grids with thin film carbon layer ranged between 6 - 30 μl per Cu-grid.

Glow-discharge treatment of Cu-grids: The Cu-grids coated with thin film carbon and silver nanoparticles were negative glow discharge treated for 30 sec @ 20 mA in argon atmosphere to remove fine surface deposits/tarnish (Quorum Q150 TES). This is an optional step.

Scanning electron microscopy: The resultant grids were evaluated in a scanning electron microscope (SEM) to observe surface characteristics and assess the distribution of dendrites or nanostructures (FEI Quanta 200).

SERS measurement: Using a micropipette, 3 μl droplets of test analyte (i.e. salicylic acid) were placed onto the SERS device and air dried as described above. Other analytes such as R6G, glyphosate and melamine were used to test the performance of the substrate. SERS measurements were acquired after the droplet was dried. Salicylic acid solutions (concentration range of 3 - 12 μl in triple distilled water) were applied on grids. Measurements were acquired at a minimum of three positions from each grid. For each sample a total of 3 SERS measurements were averaged and baseline corrected and target reference peaks were evaluated using Spectrum 10 software (Perkin Elmer). Measurements were carried out within 24 - 48 hours of preparing the SERS substrate using a Perkin Elmer Raman spectrometer (Avalon 400F) equipped with a 785 nm HeNe laser excitation at 10 mW (10 % laser power), laser power. The instrument exposure time was set at 25 sec for salicylic acid with averaging of the 4 exposures. A video camera assisted in the positioning and visual focusing of the SERS substrate on the instrument stage followed by Raman focusing (+/- 0.5 mm) of the substrate. When necessary the Cu-grids were stored in high vacuum chamber ($10^{-7}$ torr range).

## Results and discussion

Galvanic displacement is a spontaneous electrochemical reaction in which a metal ion in solution displaces atoms from a solid metal and the method can fabricate highly SERS active substrates. In the tested Cu-grid substrate, it is postulated that the silver or gold nanoparticles/nanostructures are bound by electrostatic forces and/or electromagnetic forces with the conductive metal (e.g. Cu) layer. It is also postulated that the purpose of introducing a thin carbon layer is to introduce a barrier to stop any potential interaction or reaction of copper grid with the silver nanoparticles/nanostructures, gold nanoparticles/nanostructures or even the analyte, such as salicylic acid, all of which may potentially react with copper causing interference in SERS measurement, and at the same time maintaining SERS activity. (Betz et al "Simple SERS substrates: powerful, portable, and full of potential" Phys. Chem. Chem. Phys., 2014, 16, 2224-2239). This reaction is driven by the free energy exchange resulting from the difference in reduction potential between the two species. Galvanic displacement reactions can be predisposed by reaction conditions (Wang et al. "A general strategy for synthesis of silver dendrites by galvanic displacement under hydrothermal conditions". J. Phys. Chem. Solids, 2008, 69, 1296-1300; Xie et al. "Fast growth synthesis of silver dendrite crystals assisted by sulfate ion and its application for surface-enhanced Raman scattering". J. Phys. Chem. C, 2011, 115, 9943-9951) resulting in the production of crystalline features showing dendritic or polygonal structures (Lu et al. "Galvanic replacement reaction: a simple and powerful route to hollow and porous metal nanostructures". Proc. Inst. Mech. Eng., Part N, 2007, 221, 1-16; Carraro et al. "Patterned film growth of metal-organic frameworks based on galvanic displacement" Surf. Sci. Rep., 2007,62,499-525).

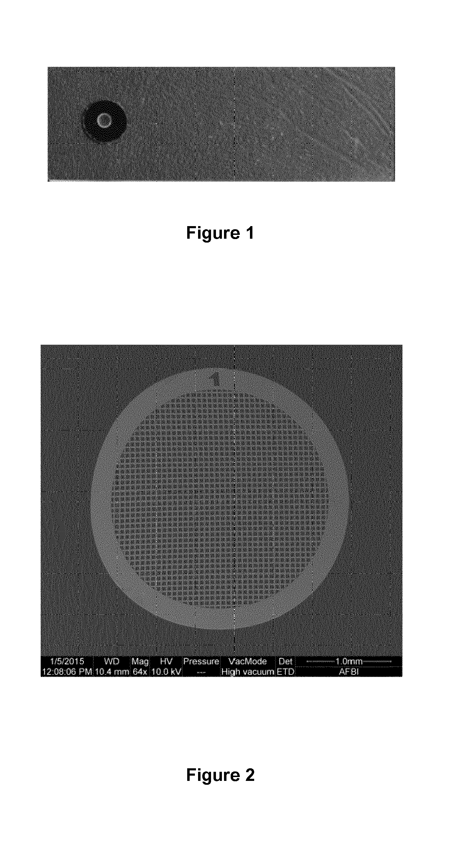

Figure 2 shows a micrograph of a commercial copper mesh with a carbon base layer to prevent flow through of the silver colloid through the copper grids. This is an important factor for generating nanostructures which can reduce point to point differences.

Substrate fabrication: The fabrication steps are shown in Figure 3 (side illustration of the Cu-grid to show the material layers, Figure 3. Salicylic acid was used as a test analyte to develop the fabrication steps listed below.

Essentially, the steps include:

(a) cleaning the surface of the Cu-grids with a carbon base layer with initial negative glow discharge treatment (480 sec @ 30 mA in argon);

(b) coating with thin carbon layer with approximate thickness of 3-15 nm;

(c) application of 6 - 30 μl volumes of silver colloidal solution to form silver dendrites (nanostructures);

(d) optional glow discharge treatment (30 sec @ 20 mA in argon atmosphere) of silver dendrites to remove surface debris / particles and to gently clean it up;

(e) optional coating with ultrathin carbon layerto approximate thickness of 1 - 3 nm.

Additional fabrication experiments were repeated using gold grids and nickel-grids instead of copper-grids. We found that the copper grids resulted in the best detection of the analytes.

**Initial Glow Discharge Parameters:** The Cu-grids with ready applied carbon base layer were purchased from the commercial suppliers and were treated with negative glow discharge treatment to remove surface impurities on the exposed copper surface. Glow discharge treatment (480 seconds @ 30 mA, Figures 3a and 4a) of the grid was identified as ideal treatment duration and maintained a high degree of SERS enhancement activity.

**Evaluation of Cu-grids:** SERS enhancement of Cu-grids deposited with different thickness of carbon (3, 5 and 7 and 11 nm) layers on the exposed copper surface were assessed. We found an optimum performance was generally achieved with an approximately 3-5 nm layer of carbon deposited on the bare copper grid (Figure 4b).

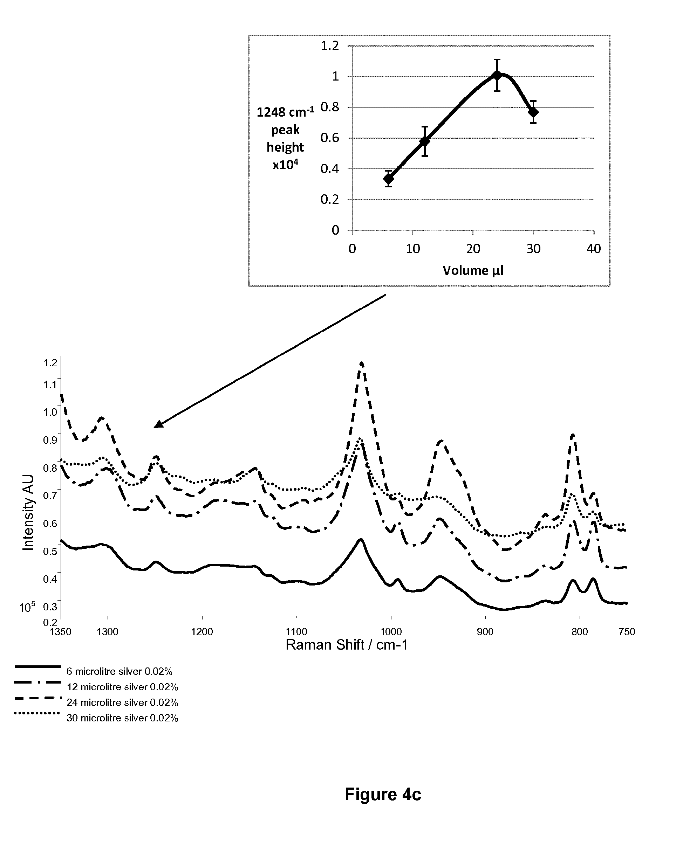

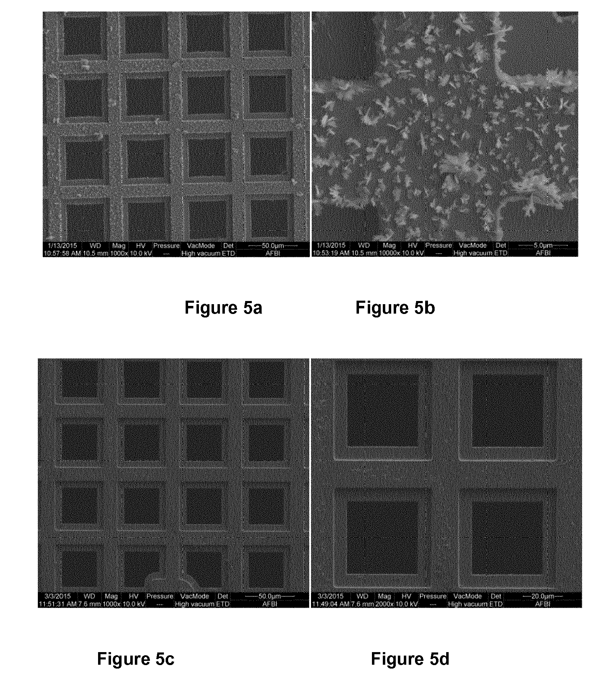

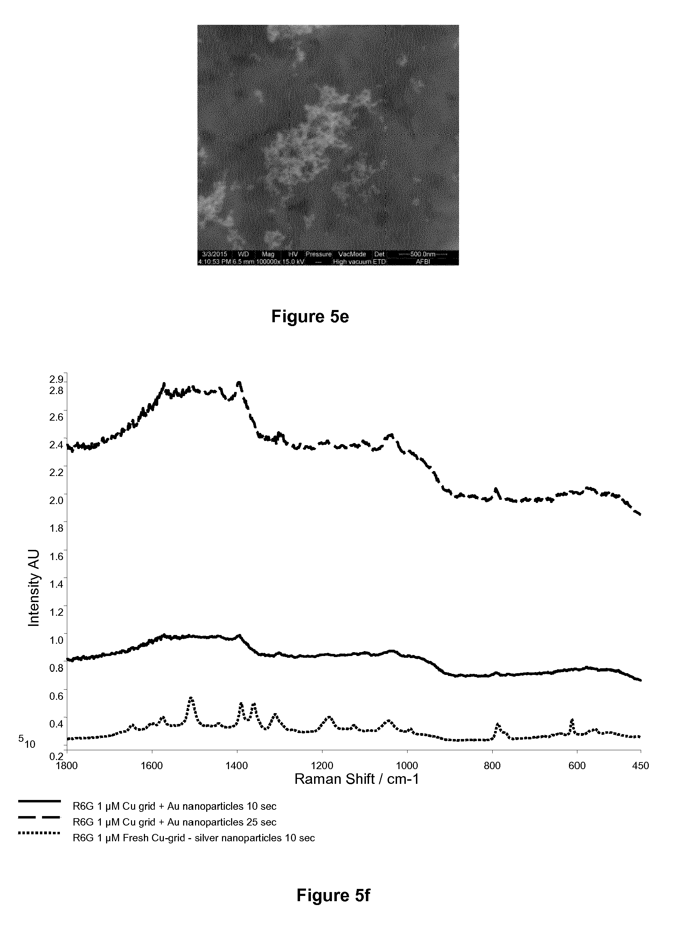

**Evaluation of Colloidal Solutions:** Carbon coated Cu-grids were evaluated by loading different volumes of silver colloidal (3 to 30 $\mu$l) solution on grid and optimum concentration was 24 $\mu$l (Figure 4c). The carbon layer on copper and the exposed rectangular grid structure restricted the spread of the liquid silver colloid drops on the grid. This is an important factor for developing consistent fabrication process using salicylic acid as a model analyte (Figure 4c). Similar experiment was carried out to evaluate different volumes of gold colloid (3 to 24 $\mu$l) on the carbon coated Cu-grids and a single drop of 3 $\mu$l application showed the regular arrangement of nanostructures and R6G (instead of salicylic acid0 performance (Figure 5c, 5d and 5e).

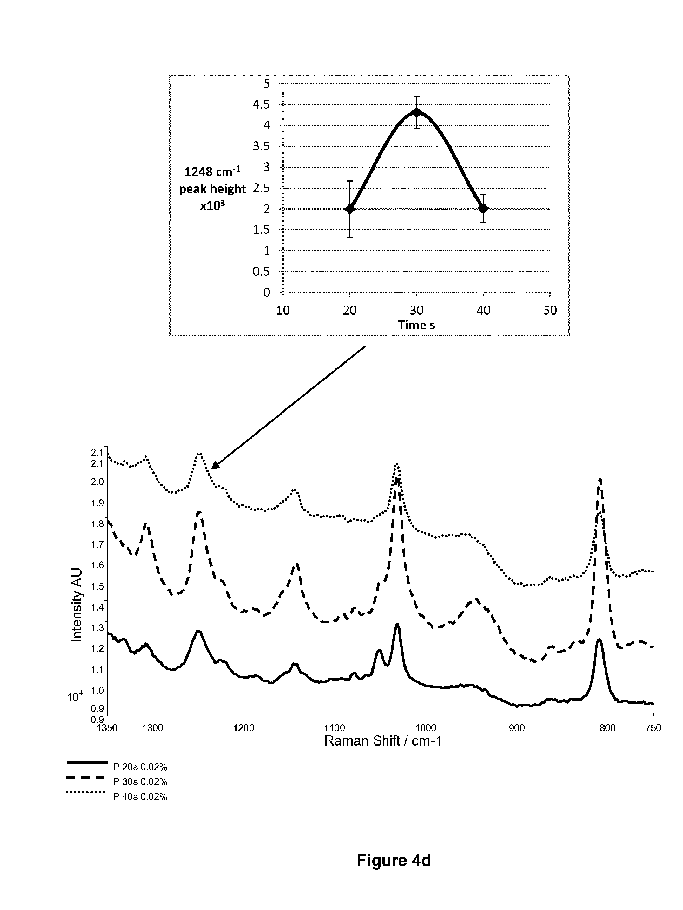

**Final Glow Discharge Parameters :** The CU-grid SERS substrate can be improved by a further optional glow discharge treatment. Three test conditions were evaluated: 20 sec, 30 sec and 40 sec @ 20 mA of the grids. SERS performance of the three treatments of substrates with salicylic acid (0.02 %) were compared and treatment at 30 sec @ 20 mA was judged to be optimum (Figure 4d). Figure 5a shows a scanning electron micrograph of silver dendrites. Figure 5b shows a regular distribution of the dendrites and nanostructures and mainly formed on the carbon coated Cu-grid bars. These dendrites, which assemble as the silver colloid dries out, are advantageous for many SERS applications as the clusters cause localised surface plasmon resonance of an analyte, such as salicylic acid and also generate higher SERS enhancements due to active Raman hot spots.

**SERS Enhancement measurement: Evaluation of SERS Cu-grids were carried out using a model analyte R6G:** The SERS enhancement factor for the Cu-grids was determined by comparing signals acquired on Cu-grids with and without silver dendrites. The test concentrations of R6G were prepared using triple distilled water and ranged between 2 mM to 10 nM R6G. Raman signals from 3 replicates for the 1508 cm$^{-1}$ peak from R6G (2 mM) on copper grids without silver dendrites were similar in Raman peak shift intensity to enhanced signals acquired at 10 nM R6G on Cu-grid with silver dendrites. Analysis of the mean Cu-grid surface covered by silver dendrites was estimated to be approximately 20 % (Figure 5b). The average enhancement factor of individual dendrites is approximately $10^3$ to $10^7$ as reported (Yu and White "A simple filter based approach to surface enhanced Raman spectroscopy for trace chemical detection", Analyst, 2012, 137(5), 1168-1173; Barrios et al "Extending lifetime of plasmonic silver structures designed for high resolution chemical imaging or chemical and biological sensing" Chemical Biological Radiological and Explosives (CBRNE) Sensing IX, Edited by Augustus Way Fountain III, Patrick J garner, Proc of SPIE, 2008, 69540C 1-12).

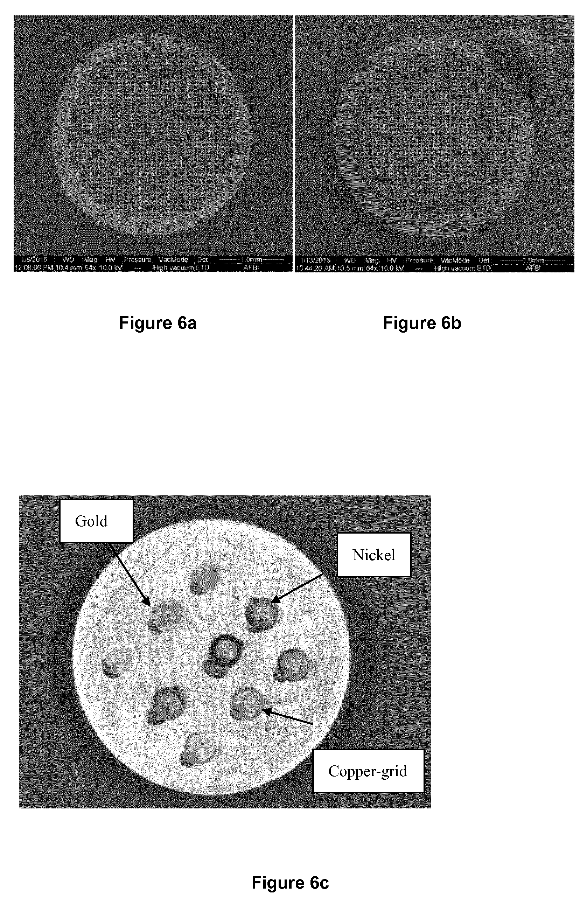

The fabrication of SERS substrate was repeated with gold and nickel grids and compared with Cu-grids for SERS enhancement. Examples of gold, nickel and copper grids are shown in Figure 6c. The resulting grids were tested for SERS activity by applying R6G 3 $\mu$l (1 $\mu$M) and gold and nickel grids exhibited lower (50 %) Raman peak height intensity of the 1508 cm$^{-1}$ compared with Cu-grids (Figure 6d).

**Variation in measured signal intensity:** Since the SERS substrate of this example exhibited randomized surface features distributed on the carbon coated grid, differences in measured signal intensity of random spots each from 3 Cu-grids and for each of the four test concentrations of R6G are shown in Table 1. The peak height at 1508 cm$^{-1}$ R6G Raman bands for each acquired signal were assessed and analysed. Table 1 shows the mean and standard deviation of the peak heights within each SERS active spot. The results indicated that the variation within each spot from a replicate substrate was small but variation from substrate to substrate for the same concentration was higher. An overlay of R6G spectra are shown in Figure 7b to show reduction in peak heights (1508 cm$^{-1}$).

**Table 1: R6G at 100, 10, 1 and 0.5 $\mu$M test concentrations**

| Analyte R6G ($\mu$M) | SERS substrate Cu grids | Mean 1508cm$^{-1}$ peak height | Standard Deviation |
|---|---|---|---|
| 100 | I | $1.69 \times 10^5$ | $7.03 \times 10^3$ |
| | II | $1.08 \times 10^5$ | $7.70 \times 10^3$ |
| | III | $1.07 \times 10^5$ | $2.45 \times 10^4$ |
| | | | |
| 10 | I | $8.57 \times 10^4$ | $1.03 \times 10^3$ |
| | II | $7.90 \times 10^4$ | $4.72 \times 10^3$ |
| | III | $8.84 \times 10^4$ | $7.94 \times 10^3$ |

(continued)

| Analyte R6G ($\mu$M) | SERS substrate Cu grids | Mean 1508cm$^{-1}$ peak height | Standard Deviation |
|---|---|---|---|
| | | | |
| 1 | I | $2.10 \times 10^4$ | $1.39 \times 10^3$ |
| | II | $2.13 \times 10^4$ | $3.73 \times 10^3$ |
| | III | $1.91 \times 10^4$ | $4.11 \times 10^2$ |
| | | | |
| 0.5 | I | $4.69 \times 10^3$ | $3.90 \times 10^2$ |
| | II | $5.64 \times 10^3$ | $4.01 \times 10^2$ |
| | III | $4.91 \times 10^3$ | $1.04 \times 10^2$ |
| 1. 4 analyte concentrations x 3 replicate substrates x 3 measurements / substrate | | | |
| 2. Measured peak height at 1508 cm$^{-1}$ Raman shift after baseline correction | | | |

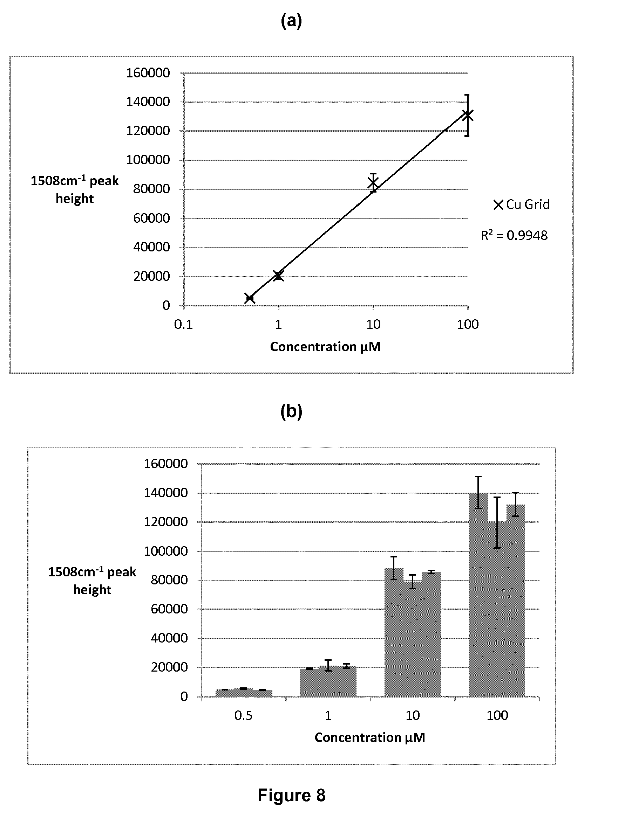

Figure 8a shows the mean and standard deviation of 3 measurements from each of the 3 grids for each of the 4 R6G concentrations. The results shown in Table 1 and Figure 8b illustrated the overall repeatability of signal across a concentration range using the SERS active Cu-grid sensor.

### Example 2

### Testing the performance range of the carbon coated Cu-grid SERS substrate vs Klarite®

This experiment aims to demonstrate the detection limits of the Raman active copper grid substrate to show the benefits of using SERS substrate of the invention compared to Klarite[(R)] a commercially available product in which the active surface is gold coated silicon using a reference SERS compound Rhodomine 6G. Klarite® is manufactured by Renishaw Diagnostics (Glasgow, UK). It is made of 0.6 mm of photolithography patterned (arrays of inverted pyramids 1.5 x 1.5 $\mu$m with 20 nm gold features on the pyramid wall) silicon coated with a uniform layer of approximately half a micron thickness of gold. In addition, the performance of the Cu-grid substrate was evaluated to show limits of detection of target compounds, such as a herbicide / pesticide (e.g. glyphosate) and food contaminant (e.g. melamine).

Materials: Silver nitrate, R6G, glyphosate and melamine were purchased from Sigma-Aldrich. Cu-grids were purchased from a commercial company (TAAB). Klarite[(R)] purchased from Renishaw Diagnostics (Glasgow, UK).

Method: Protocols used for SERS substrate preparation are described in example 1.

SERS measurements were carried out from three randomly selected locations within each of 3 replicate Cu-grids, giving a total of 9 measurements for each analyte concentration.

The laser (785 nm) power used was set at 10% power (10 mW, details of instruments and protocols in Example 1). The exposure times were set at 10 sec or 25 sec for R6G, 25 sec for glyphosate and 20 sec for melamine with averaging of the SERS signal over 4 signal exposures. To determine the signal intensity, the height of the most prominent peak for analyte from the Raman bands was calculated (1508 cm$^{-1}$ for R6G, 1440 cm$^{-1}$ for glyphosate and 685 cm$^{-1}$ for melamine). To establish the SERS enhancement factor of the silver nanoparticle coated copper grid, a 3 $\mu$L droplet of 20 mM R6G was spotted onto a filter paper (Whatman grade 50); the resulting signal was compared with the SERS signal from 3 $\mu$l droplet of R6G on Cu-grid (Figure 7a).

The enhancement factor (EF) of the substrate is determined by the following equation:

$$EF = (I_{SERS} / I_{Raman})(N_{Raman} / N_{SERS})$$

Where the intensity ($I$) is the height of the 1508 cm$^{-1}$ R6G Raman peak and $N$ represents the total number of R6G (Raman and SERS) molecules deposited on the substrate.

Protocols for SERS detection of melamine and glyphosate were similar to R6G described above. The most prominent peaks were 1440 cm$^{-1}$ for glyphosate and 685 cm$^{-1}$ for melamine. Test solutions of glyphosate and melamine were prepared in MQ water.

The detection limits of the three analytes (R6G, glyphosate and melamine) were compared with Klarite [(R)] to show performance of the Cu-grid SERS substrate.

**Results and Discussion:**

The SEM image in Figure 6 a & b indicates that a high density of SERS-active hot spots exist across the silver/carbon nano-structured copper grid substrate, which will enable a large enhancement as compared to conventional Raman spectroscopy. The Raman signals for 1 $\mu$M R6G on Cu-grid with silver dendrites and 20 mM R6G on filter paper are compared and the two results are presented in Figure 7a, to show the significant enhancement factor of the Cu-grid substrate.

Using the data presented in Figure 7a,b SERS enhancement factor of 1.21 x $10^5$ was determined for R6G compared to standard Raman spectroscopy using 785 nm laser wave length. However, evaluation of SEM images (Figure 4a) revealed that approximately 20% of the carbon coated Cu-grid bars were covered by silver nano-structures / dendrites. Therefore the enhancement of the silver nano-clusters/dendrites (i.e. SERS activity) was approximately 6.07 x $10^5$. During the preparation of the SERS substrate loading too much silver colloid (such as 30 $\mu$l or more) application on the Cu-grid can potentially result in forming dendrites on approximately 50 - 60 % of the copper grid bars which will cause undesirable reduced plasmonic activity. Figure 4c shows the measured intensity of the 1248 cm$^{-1}$ salicylic acid peak after first loading increasing volumes of silver colloid (6 to 30 $\mu$l, silver content 1.143 mg / ml) through the copper grid and then loading 3 $\mu$l of salicylic acid (0.02 %) (Figure 4c). As shown in the figure, the signal intensity decreases significantly when loading more than 24 $\mu$L of silver colloid (1.143 mg / ml) on the Cu-grid (Figure 4c).

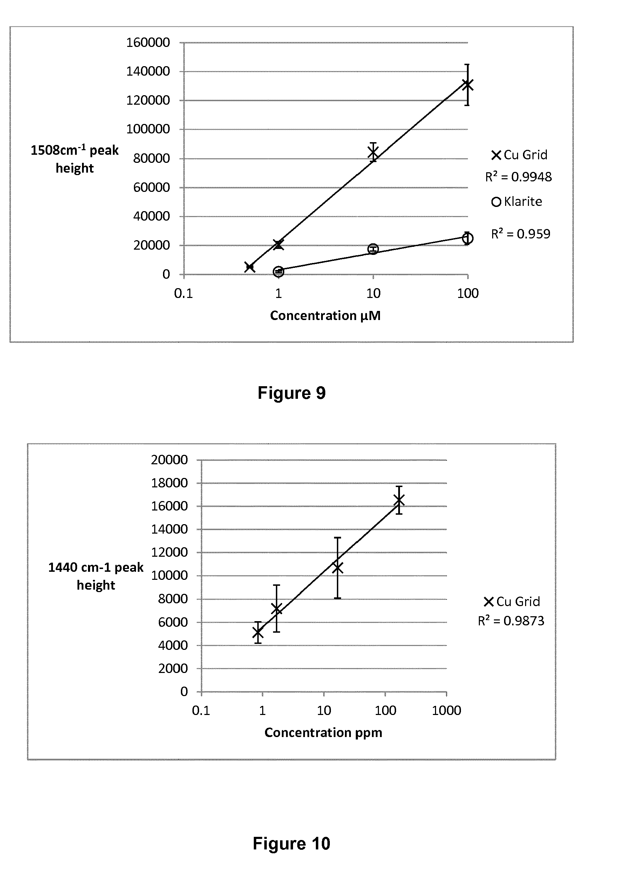

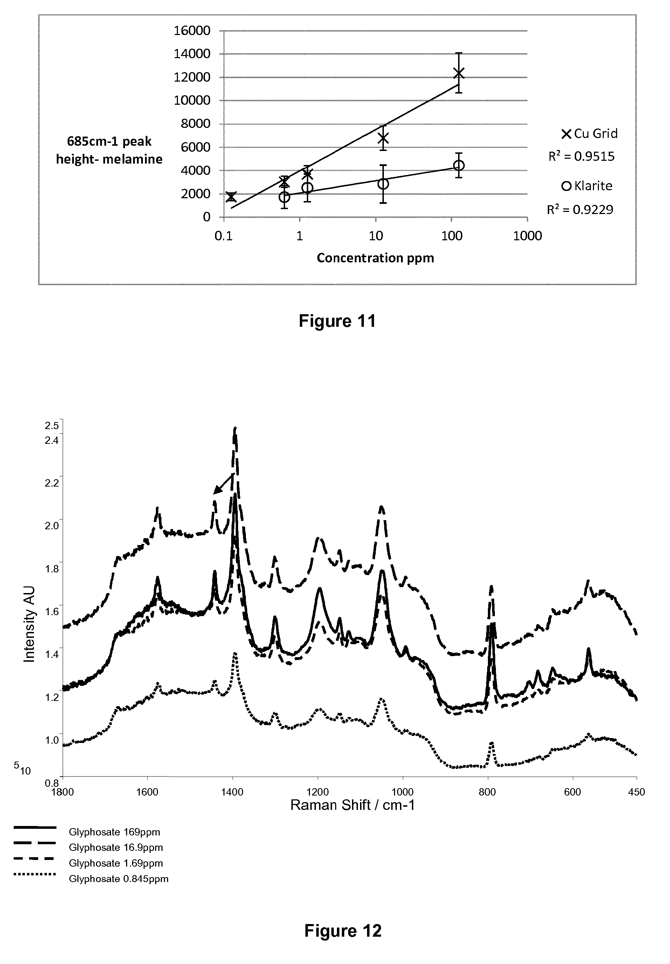

In order to demonstrate the use of copper grid SERS substrate for practical applications, we performed detection of R6G, a Raman reference compound; melamine a toxic food contaminant; and glyphosate a commonly used organophosphate herbicide and pesticide. Evaluation of the Cu-grid to detect different concentrations of R6G is shown in Figure 9. Cu-grid can detect R6G as low as 0.5 $\mu$M (0.240 ppm) compared to a detection limit of 1 $\mu$M (0.479 ppm) for Klarite®. The detection of the organophosphate glyphosate on Cu-grid is shown in Figure 10 showing a detection limit of 5 $\mu$m (0.845 ppm). Analysis of glyphosate by drying a test sample onto Klarite® was carried out but no response could be detected in all the test concentrations under the instrument setting. The detection performance for melamine is shown in Figure 11 showing changes in the peak height/signal strengths of 126 ppm to 0.126 ppm melamine concentrations. Analysis of melamine by drying test samples onto Klarite® showed that 0.630 ppm (5 $\mu$M) i.e. lowest concentration, of melamine could be detected, while the Cu-grid SERS substrate enabled the detection of a significantly lower concentration of 0.126 ppm (1 $\mu$M). The intensity of the 685 cm$^{-1}$ Raman peak for melamine is plotted for each concentration in Figure 11. The detection limit of 0.126 ppm was achieved, which is well below the currently accepted levels of 2.5 ppm for melamine in foods as established by the FDA (USA), making it possible to use Cu-grid SERS substrate for melamine in foods.

**Example 3**

**Copper grid SERS substrate - storage performance**

The aim of this Example is to demonstrate the performance of the Raman active copper grid substrate of the invention under two storage conditions

(a) modified atmosphere packaging (standard packaging for sensitive materials using positive nitrogen and carbon dioxide gases in packaging);
(b) high vacuum storage (10$^{-7}$ torr range)

The SERS substrate tested in this example was manufactured using a final treatment step comprising the coating of the silver nanostructures with the ultrathin carbon (nano) layers (1-3 nm, Figure 4e) by evaporation method. This final ultrathin carbon laer provides a protective barrier to oxidation of the silver nanostructures. The impact of this ultrathin carbon barrier on SERS activity and shelf life was evaluated over a 4 week period. Gold was also sputter coated (1 nm) on the silver nanostructures as a protective barrier to oxidation of the silver nanostructures.

Materials: Silver nitrate and Rhodamine 6G were purchased from Sigma-Aldrich. Cu-grids were purchased from a commercial company (TAAB). Other materials used in this example are described in Examples 1 and 2.

Method: Protocols used for SERS substrate preparation are described in previous Examples 1 and 2.

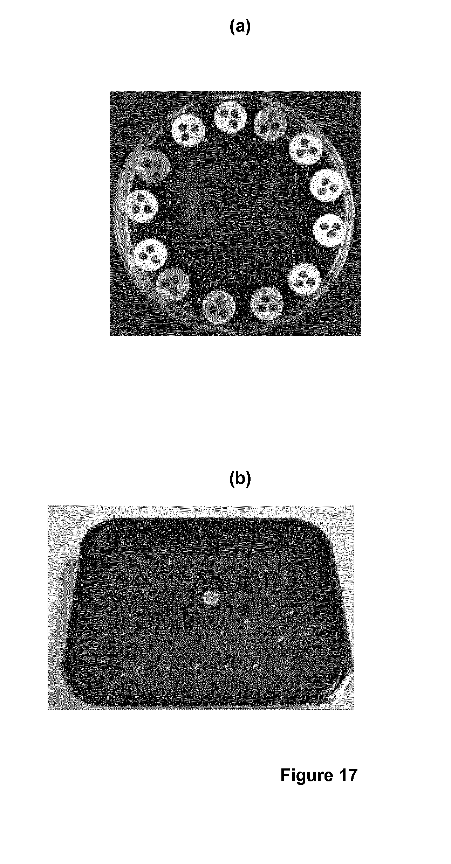

The stability of the substrate was tested by monitoring Raman activity over a period of 6 weeks. The substrates were prepared as 10 batches of 3 Cu-grids with the objective of storing the substrates in 4 °C and packaged (Henkelman, vacuum system) with a mixture of nitrogen (92.8 %), carbon dioxide (5.7 %) and oxygen (1.6 %) gases and gases in selected packages were analysed by a gas analyser (Gaspace Advance, GS3P). The packaged Cu-grid samples (Figure 17a) were assessed at 2 week intervals to evaluate the dendrites/nanostructures and stability using R6G (concentration 1 $\mu$M). Similar batch of Cu-grids were fabricated and stored in the vacuum chamber of the SEM. The Cu-grids were initially evaluated for changes in surface features of the nanostructures / dendrites by SEM followed by monitoring of R6G reference peaks (1508 cm$^{-1}$). The performance of the stored Cu-grids were compared with Klarite® to assess sensitivity to R6G (1 $\mu$M). Protocols for measurement of SERS enhancement of R6G are described in Experiment 2.

SERS measurements were carried out from three randomly selected locations within each substrate and repeated over three substrates, giving a total of nine SERS measurements for R6G.

The modified atmosphere packaging (MAP) is tailor-made packaging designed to suit specific packaging options (Figures 17 a,b). Currently commercial manufacturers of SERS substrate use MAP to maintain long term shelf life of products.

## Results and discussion:

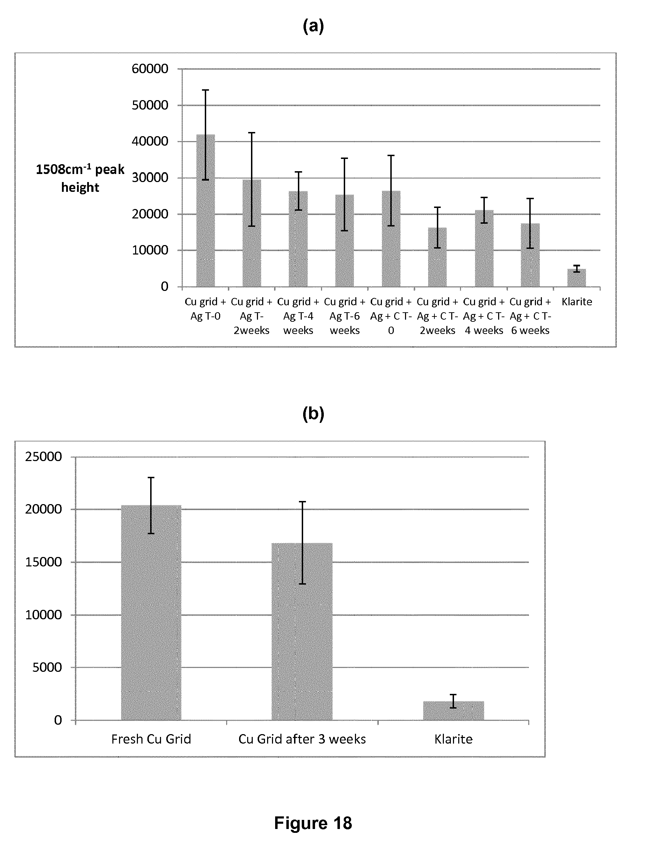

(a) Packaging experiment: During the 6 week period, stability of Cu-grid substrates were evaluated regularly. The Raman spectral peak height at 1508 cm$^{-1}$ of R6G versus the storage time are plotted in Figure 18a showing a reduction of 10 to 20 % of peak intensity after 2 weeks of storage. The error bars in Figure 18a represent the standard deviation for 9 spectral measurements (3 substrates, three different positions from each substrate) and the exposure time was 25 sec for each spectra.

(b) High vacuum storage: Similar evaluation of Cu-grid substrates as described above was carried out to assess impact of high vacuum storage in ambient conditions. Figure 18b shows the reduction of 10% in R6G Raman peak height 1508 cm$^{-1}$ after 3 weeks compared to initial sample (time 0).

We postulate that the reduction of 1508 cm$^{-1}$ peak intensity after storage 2 - 3 weeks may have been caused by changes on the tips of the nanostructures and after which SERS peak intensity measured from both carbon coated and uncoated Cu-grids showed variations but the differences were not significant after 4 and 6 weeks (Figure 18). It may also be possible that changes were caused by partial / slight degradation of nanostructures / dendrites, which created changes in the localized electromagnetic field and the adsorption behaviour of target analyte (Ocwieja et al., "Silver particle monolayers- formation, stability, applications", Advances in Colloid and Interface Science, 2014, in press (dx.doi.org/10.1016/j.cis.2014.07.001; Betz et al "Simple SERS substrates: powerful, portable, and full of potential" Phys. Chem. Chem. Phys., 2014, 16, 2224-2239).

The shelf life of Cu-grid substrates appears to be at least 1 month as tested and stable for a potentially longer period.

In addition, the protected substrate expands the palette of available chemicals to functionalise the carbon layer, which may enable improved and diverse chemical control over the nature of the analyte, i.e. surface binding for biomedical, homeland security and environmental applications (Barrios et al. "Extending lifetime of plasmonic silver structures designed for high resolution chemical imaging or chemical and biological sensing" Chemical Biological Radiological and Explosives (CBRNE) Sensing IX, Edited by Augustus Way Fountain III, Patrick J garner, Proc of SPIE, 2008, 69540C 1-12; Zhang et al. "Ultrastable substrate for SERS: Al2O3 overlays fabricated by atomic layer deposition yield improved anthrax biomarker detection", Journal of American Chemical Society, 2006, 128, 10304-10309; Grouchko, et al., (2009) Coalescence of silver nanoparticles at room temperature: unusual crystal structure transformation and dendrite formation induced by self-assembly. Langmuir 25, 2501-2503).

## General Conclusion:

We have manufactured an inexpensive and highly sensitive substrate for performing spectroscopy, including SERS. The substrate of the invention is advantageous and highly sensitive to low amounts of analyte.

The results presented here have shown that the SERS substrate of the invention is more sensitive than conventional techniques and known SERS substrates, such as Klarite®. We have advantageously observed highly sensitive low detection limits. For example, we have observed detection limits of 240 ppb for R6G, 126 ppb for melamine and 845 ppb for glyphosate with the substrate of the invention. This means that very low amounts of analytes may be detected using the substrate of the invention. This is in contrast to the conventional substrate Klarite® which is not as sensitive as the substrate of the invention. Specifically we have found that the SERS substrate of the invention can detect R6G as low as 0.5 $\mu$M (0.240 ppm) compared to a detection limit of 1 $\mu$M (0.479 ppm) for Klarite®. The general conclusion is that substrate of the invention is more sensitive than Klarite.

The Examples also demonstrate that the new substrate is well suited for routine environmental monitoring and food analysis.

We have also found that when the silver dendrites / nanostructures have the optional ultrathin carbon layer applied that this not only provides a large surface areas to trap environmental pollutants and bring them close to the metallic surface, but this also provides an inherent protective coating which we postulate maintains and improves the stability of the substrate. This "partitioning" property makes it possible to separate pollutants and analyze complicated environmental samples.

**Claims**

1. A multi-layered substrate for spectroscopy, comprising
a carbon base layer;
a conductive metal support layer, preferably selected from copper, gold, aluminium, platinum or nickel, with pattern defined therein;
a thin carbon layer; and
a plurality of silver nanostructures or gold nanostructures aligned with at least part of the conductive metal support layer pattern.

2. The multi-layered substrate according to claim 1 which is a surface enhanced Raman spectroscopy (SERS) substrate.

3. The multi-layered substrate of claim 1 or claim 2 wherein the plurality of silver and gold nanostructures are disposed on the thin carbon layer and aligned with at least part of the conductive metal support layer pattern.

4. The multi-layered substrate of any of claims 1 to 3 further comprising an ultrathin film carbon or graphene top layer disposed or partially disposed on the plurality of the silver or gold nanostructures.

5. The multi-layered substrate of any of the preceding claims wherein the conductive metal support layer with pattern defined therein is
a metal grid comprising a series of intersecting members, preferably straight, preferably vertical, horizontal, angular or curved members; or
a metal layer with a plurality of depressions or projections.

6. The multi-layered substrate of any of the preceding claims wherein the conductive metal support layer is a reticular mesh, preferably with rectangular reticulations.

7. The multi-layered substrate, preferably SERS substrate, of any of the preceding claims comprising
a carbon base layer;
a copper, gold, aluminium, platinum or nickel support layer with pattern defined therein disposed on the surface of the carbon base layer;
a thin carbon layer at least partially disposed on the surface of copper, gold, aluminium or platinum support layer;
a plurality of silver or gold nanostructures, preferably a plurality of silver dendrites, at least partially disposed on the thin carbon layer and aligned with at least part of the support layer pattern; and
an optional ultrathin carbon or graphene top layer disposed or partially disposed on the plurality of the silver or gold nanostructures.

8. The multi-layered substrate, preferably SERS substrate, of any of the preceding claims comprising
a carbon base layer;
a copper, gold, aluminium, platinum or nickel grid in the form of a reticular mesh disposed on the surface of the carbon base layer;
a thin carbon layer disposed or at least partially disposed on the surface of reticular mesh;
a plurality of silver or gold nanostructures, preferably a plurality of silver dendrites, at least partially disposed on the thin film carbon layer and aligned with at least part of the reticular mesh; and
an optional ultrathin carbon or graphene top layer disposed or partially disposed on the plurality of the silver or gold nanostructures.

9. A method for preparing a substrate for spectroscopy, preferably a substrate for surface enhanced Raman spectroscopy (SERS), the method comprising:

placing a conductive metal support layer, preferably a copper, aluminium, platinum or nickel support layer, with pattern defined therein on a carbon base layer and carrying out a cleaning step, preferably a first glow discharge treatment step, to remove impurities from the surface of the conductive metal support layer;

depositing a thin carbon layer on the surface of metal support layer; and
subsequently depositing a silver or gold colloid onto the surface of the thin carbon layer, to result in silver or gold nanostructure formation and form a substrate with enhanced activity and/or surface plasmon resonance.

10. The method of claim 9 wherein silver or gold colloid solution is deposited onto the surface of the thin carbon layer and subjected to air drying prior to an optional second glow discharge treatment step..

11. The method according to any claims 9 to 11 comprising the further step of depositing an ultrathin carbon or graphene top layer of approximately 1 to 3 nm, preferably 1 to 2nm, onto the substrate.

12. The substrate or method of any of the preceding claims wherein the carbon base layer has a thickness of approximately 8 to 12 nm.

13. The substrate or method of any of the preceding claims wherein the copper, gold, aluminium, platinum or nickel grid is a transmission electron microscopy grid.

14. The substrate or method of any of the preceding claims in which the thin carbon layer has a thickness of approximately 1 to 20 nanometers, preferably 1 to 15 nanometers more preferably 1 to 10 nanometers, even more preferably 3 to 5 nanometers.

15. The substrate or method of any of the preceding claims wherein the plurality of silver or gold nanostructures disposed on the thin film carbon layer are aligned with less than approximately 40%, preferably approximately 10 to 20% of the conductive metal support layer pattern.

**Figure 1**

**Figure 2**

Glow discharge
(480s @30mA)

Carbon support layer
down

Carbon layer (3 nm)

Silver (0.69 µg/3µl)

Glow discharge
(30s @20 mA)

Carbon layer (1 nm)

(a
(b
(c
(d
(e

**Figure 3**

**Figure 4a**

**Figure 4b**

**Figure 4c**

**Figure 4d**

Figure 4e

Figure 4f

Figure 4g

**Figure 5a**          **Figure 5b**

**Figure 5c**          **Figure 5d**

Figure 5e

R6G 1 µM Cu grid + Au nanoparticles 10 sec
R6G 1 µM Cu grid + Au nanoparticles 25 sec
R6G 1 µM Fresh Cu-grid - silver nanoparticles 10 sec

Figure 5f

**Figure 6a**                    **Figure 6b**

**Figure 6c**

**(a)**

R6G 0.5µM Cu Grid
R6G 20mM Filter paper

**(b)**

R6G 0.5µM Cu Grid
R6G 1.0µM Cu Grid
R6G 10µM Cu Grid
R6G 100µM Cu Grid

**Figure 7**

**(a)**

**(b)**

Figure 8

Figure 9

Figure 10

**685cm-1 peak height- melamine**

X Cu Grid
$R^2 = 0.9515$

O Klarite
$R^2 = 0.9229$

Concentration ppm

Figure 11

Intensity AU

Raman Shift / cm-1

——— Glyphosate 169ppm
— — Glyphosate 16.9ppm
- - - Glyphosate 1.69ppm
·········· Glyphosate 0.845ppm

Figure 12

**Figure 13**

Figure 14

Figure 15

Figure 16a

**Figure 16 b**

**(a)**

**(b)**

**Figure 17**

**(a)**

**(b)**

**Figure 18**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PAROMITA KUNDU ET AL: "Pristine, adherent ultrathin gold nanowires on substrates and between pre-defined contacts via a wet chemical route", NANOSCALE, vol. 4, no. 2, 1 January 2012 (2012-01-01), pages 433-437, XP055216861, ISSN: 2040-3364, DOI: 10.1039/C1NR11264C * the whole document * | 1-15 | INV. G01N21/65 B82Y30/00 B22F1/00 |
| Y | KUN JIA ET AL: "A facile and cost-effective TEM grid approach to design gold nano-structured substrates for high throughput plasmonic sensitive detection of biomolecules", THE ANALYST, vol. 138, no. 4, 1 January 2013 (2013-01-01), page 1015, XP055216503, ISSN: 0003-2654, DOI: 10.1039/c2an36274k * the whole document * | 1-15 | |
| A | US 2011/194106 A1 (MURAKAMI MAKOTO [US] ET AL) 11 August 2011 (2011-08-11) * abstract * * paragraph [0037] * | 1-15 | TECHNICAL FIELDS SEARCHED (IPC) G01N B82Y B22F |
| A | WO 2004/092730 A2 (BIOGENON LTD [FI]; VASKIVUO TOMMI E [FI]; ALASAARELA ILKKA [FI]; KAERK) 28 October 2004 (2004-10-28) * page 10, line 1 - page 14, line 30 * * page 29, line 36 - page 30, line 22 * | 1-15 | |

The present search report has been drawn up for all claims

| Place of search | Date of completion of the search | Examiner |
|---|---|---|
| Munich | 29 September 2015 | Pisani, Francesca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 16 0653

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2015

| Patent document cited in search report | | Publication date | Patent family member(s) | | Publication date |
|---|---|---|---|---|---|
| US 2011194106 | A1 | 11-08-2011 | CN | 102782466 A | 14-11-2012 |
| | | | DE | 112011100503 T5 | 14-03-2013 |
| | | | JP | 2013527910 A | 04-07-2013 |
| | | | US | 2011194106 A1 | 11-08-2011 |
| | | | WO | 2011100153 A1 | 18-08-2011 |
| WO 2004092730 | A2 | 28-10-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130107254 A1

### Non-patent literature cited in the description

- **OCWIEJA et al.** Silver particle monolayers- formation, stability, applications. *Advances in Colloid and Interface Science,* 2014
- **FURTAW et al.** Near infrared, surface-enhanced fluorescence using silver nanoparticles aggregates in solution. *Plasmonics,* 2014, vol. 9, 27-34
- **SCHMITT et al.** Raman spectroscopy - a powerful approach towards labelfree biomedical diagnostic. *Endoskopie heute,* 2012, vol. 25, 262-267
- **BANTZ et al.** Recent progress in SERS biosensing. *Physical Chemistry Chemical Physics,* 2011, vol. 13, 11551-11567
- **PILIARIK et al.** Compact and low-cost biosensor based on novel approach to spectroscopy of surface plasmons. *Biosensors and Bioelectronics,* 2009, vol. 24, 3430-3435
- **YU ; WHITE.** A simple filter based approach to surface enhanced Raman spectroscopy for trace chemical detection. *Analyst,* 2012, vol. 137 (5), 1168-1173
- **LIU ; LEE.** Nanowell surface enhanced Raman scattering arrays fabricated by soft-lithography for label-free biomolecular detections in integrated microfluidics. *Appl. Phys. Lett.,* 2005, (87), 074101
- **QUANG et al.** A portable surface-enhanced Raman scattering sensor integrated with a lab-on-a-chip for field analysis. *Lab Chip,* 2008, vol. 8, 2214-2219
- **HUH et al.** Enhanced on-chip SERS based biomolecular detection using electrokinetically active microwells. *Lab Chip,* 2009, vol. 9, 433-439
- **WANG et al.** Surface-enhanced Raman scattering in nanoliter droplets: towards high-sensitivity detection of mercury (II) ions. *J. Anal. Bioanal. Chem.,* 2009, vol. 394, 1827-1832
- **EROL et al.** SERS not to be taken for granted in the presence of oxygen. *Journal of American Chemical Society,* 2009, vol. 131, 7480-7481
- **QI et al.** The effect of size and size distribution on the oxidation kinetics and plasmonics of nanoscale Ag particles. *Nanotechnology,* 2010, vol. 21, 215706
- **BETZ et al.** Simple SERS substrates: powerful, portable, and full of potential. *Phys. Chem. Chem. Phys.,* 2014, vol. 16, 2224-2239
- **KUMAR et al.** Preparation of highly water dispersible functional graphene / silver nanocomposite for the detection of melamine. *Sensors and actuators B: Chemical,* 2013, vol. 181, 885-893
- Extending lifetime of plasmonic silver structures designed for high resolution chemical imaging or chemical and biological sensing. **BARRIOS et al.** Chemical Biological Radiological and Explosives (CBRNE) Sensing IX. 2008, 1-12
- **LIU et al.** Ultrathin diamond like carbon film coated silver nanoparticles based substrates for surface enhanced Raman spectroscopy. *ACS nano,* 2010, vol. 5, 2643-2648
- **ZHANG et al.** Ultrastable substrate for SERS: Al2O3 overlays fabricated by atomic layer deposition yield improved anthrax biomarker detection. *Journal of American Chemical Society,* 2006, vol. 128, 10304-10309
- **COSTA et al.** Surface enhanced Raman spectroscopy studies of organophosphorous model molecules and pesticides. *Phys. Chem. Chem. Phys,* 2012, vol. 14, 15645-15651
- Surface enhanced Raman scattering liquid sensor for quantitative detection of trace melamine in dairy products. **ZOU et al.** Intech. 2014
- **LEE ; MEISEL.** Adsorption and Suriace-Enhanced Raman of Dyes on Silver and Gold Sols. *J. Phys. Chem.,* 1982, vol. 86, 3391-3395
- **CYRANKIEWICZ et al.** Study of SERS efficiency of metallic colloidal systems. *Journal of Physics: Conference Series,* 2007, vol. 79, 1
- **WANG et al.** A general strategy for synthesis of silver dendrites by galvanic displacement under hydrothermal conditions. *J. Phys. Chem. Solids,* 2008, vol. 69, 1296-1300
- **XIE et al.** Fast growth synthesis of silver dendrite crystals assisted by sulfate ion and its application for surface-enhanced Raman scattering. *J. Phys. Chem. C,* 2011, vol. 115, 9943-9951

- **LU et al.** Galvanic replacement reaction: a simple and powerful route to hollow and porous metal nanostructures. *Proc. Inst. Mech. Eng.,* 2007, vol. 221, 1-16
- **CARRARO et al.** Patterned film growth of metal-organic frameworks based on galvanic displacement. *Surf. Sci. Rep.,* 2007, vol. 62, 499-525
- **GROUCHKO et al.** Coalescence of silver nanoparticles at room temperature: unusual crystal structure transformation and dendrite formation induced by self-assembly. *Langmuir,* 2009, vol. 25, 2501-2503